# EUROPEAN PATENT SPECIFICATION

(11) **EP 2 644 483 B1**
(45) Date of publication and mention of the grant of the patent: **14.05.2014**
(21) Application number: 13159389.9
(22) Date of filing: 15.03.2013
(51) Int. Cl.: B62J 3/00, B62J 17/02, B62J 99/00

(54) **Saddle riding type vehicle**
Sattelfahrzeug
Véhicule à monture

(30) Priority: 27.03.2012 JP 2012071542; 09.01.2013 JP 2013001795
(43) Date of publication of application: 02.10.2013
(73) Proprietor: Yamaha Hatsudoki Kabushiki Kaisha, Iwata-shi, Shizuoka 438-8501 (JP)
(72) Inventor: Takesako, Wahei, Iwata-shi, Shizuoka 438-8501 (JP); Phansua, Jaruwat, 10540 Samutprakarn (TH); Rueangrit, Kengkla, 10540 Samutprakarn (TH)
(74) Representative: Grünecker, Kinkeldey, Stockmair & Schwanhäusser

(56) References cited:
- JP-A- H07 329 849
- JP-A- 2012 179 987
- JP-U- S6 313 392
- JP-U- H01 131 689

## Description

The present invention relates to a saddle riding type vehicle according to the preamble of independent claim 1. Such a saddle riding type vhicle can be taken from the prior art document JP 2010-120629 A**.**

Conventionally, saddle riding type vehicles having horns (alarming horns) are known. JP 2010-120629 A discloses a scooter type vehicle having a central cover disposed forward of a head tube, and a horn disposed rearward of the central cover. The central cover has horn bores formed in a position thereof forward of the horn. The sound (warning sound) produced by the horn is emitted forward of the vehicle through the horn bores.

However, the conventional example with such construction has the following problems.

In time of traveling or cleaning the vehicle, for example, foreign substances such as water, mud and gravel can easily enter rearward (inward) of the central cover through the horn bores. When foreign substances act on the horn, there is a possibility of lowering durability of the horn.

In order to inhibit the lowering of durability of the horn, it is conceivable to make the horn bores smaller or to close the horn bores. This measure may inhibit passage of foreign substances through the horn bores, but the warning sound produced by the horn also is hampered to pass through the horn bores. Therefore, the warning sound cannot easily be transmitted forward of the central cover, arousing concern about an insufficient volume of the warning sound forward of the vehicle.

The present invention has been made having regard to the state of the art noted above, and its object is to provide a saddle riding type vehicle which can appropriately transmit a warning sound of a horn forward of the vehicle, while inhibiting lowering of durability of the horn.

According to the present invention said object is solved by a saddle riding type vehicle having the features of independent claim 1. Preferred embodiments are laid down in the dependent claims.

Accordingly, it is provided a saddle riding type vehicle comprising:
a head tube;
a front fork rotatably supported by the head tube;
a front wheel supported by lower parts of the front fork;
a body cover having a front cover portion disposed forward of the head tube, and a rear cover portion disposed rearward of the head tube and connected to the front cover portion; and
a horn disposed between the front cover portion and the rear cover portion;
wherein the body cover has an opening formed therein for receiving the front fork; the horn is disposed above the opening; characterized in that the horn is disposed to have a horn axis perpendicular to a front face thereof and extending downward and forward; and at least part of the horn is visible through the opening for receiving the front fork, when seen from a direction of the horn axis.

With the saddle riding type vehicle according to the present teaching, the horn produces a warning sound. The warning sound is transmitted through a linear path along the horn axis. When the front end of the front wheel is located at the vehicle center, for example, at least part of the horn is exposed from the opening as the saddle riding type vehicle is seen from the direction of the horn axis. Consequently, the warning sound can directly come out of the interior of the body cover to the exterior through the opening for receiving the front fork. Thus, the warning sound emitted from the horn can be released to the exterior of the body cover through the opening.

Since the horn axis extends downward and forward of the horn, the linear path is directed downward and forward of the horn. Therefore, the warning sound conveniently reflects on a traveling surface, and the warning sound after the reflection proceeds further forward. That is, the warning sound can be sent forward by causing it to reflect on the traveling surface. In other words, the warning sound is transmitted forward of the saddle riding type vehicle by using reflection of the warning sound.

Therefore, the warning sound can be transmitted appropriately forward of the saddle riding type vehicle. That is, the volume of the warning sound forward of the saddle riding type vehicle can be secured appropriately.

With the above construction, it is possible to employ a front cover portion having smaller horn bores or a front cover portion having no horn bore. Such front cover portions are expected to inhibit foreign substances from entering between the front cover portion and the rear cover portion, and to inhibit lowering of the durability of the horn. That is, the construction of the present teaching enables a reduction in size of the horn bores or an occlusion (exclusion) of the horn bores, thereby to realize an improvement in the durability of the horn.

According to the teaching described above, it is preferred that the horn is disposed to have the horn axis extending further forward than the front wheel. This can cause the warning sound to reflect on the traveling surface forward of the front wheel to send it forward. Consequently, the warning sound can be sent forward more appropriately.

According to the teaching described above, it is preferred that at least part of the horn overlaps the head tube as seen from a side of the vehicle. Since the horn is disposed in a height position similar to the head tube, water, mud, gravel and the like (hereinafter called simply "foreign substances"), even when entering between the front cover portion and the rear cover portion through the opening, do not easily act on the horn. Consequently, the horn is conveniently prevented from being stained with the foreign substances, thereby to prevent the durability of the horn being lowered by contamination. Compared with the case of placing the horn forward of the head tube, for example, the length in the fore and aft direction of the front cover portion and rear cover portion can be restrained.

According to the teaching described above, it is preferred that the horn axis overlaps the front wheel as seen from a side of the vehicle. With this, the warning sound can reflect on a portion of the traveling surface close to the front wheel. Consequently, the warning sound can be transmitted forward of the saddle riding type vehicle efficiently. Since the horn axis overlaps the front wheel as seen from a side of the vehicle, the size of the opening can be reduced, thereby to shorten the length in the fore and aft direction of the body cover.

According to the teaching described above, it is preferred that, when a front end of the front wheel is located at a vehicle center, the horn is located outward of the front wheel in a transverse direction of the vehicle as seen from front or top of the vehicle. Since the position of the horn in the transverse direction of the vehicle is displaced from the position of the front wheel in the transverse direction, the warning sound is not easily blocked by the front wheel, but easily hits the traveling surface directly from the horn. Therefore, the warning sound can reflect on the traveling surface with increased effect.

According to the teaching described above, it is preferred that, when a front end of the front wheel is located at a vehicle center, at least part of the horn is located outward of the front fork in a transverse direction of the vehicle as seen from front or top of the vehicle. Since at least part of the position (range) of the horn is displaced in the transverse direction of the vehicle from the position (range) of the front fork, the warning sound is not easily blocked by the front fork, but easily hits the traveling surface directly from the horn. Therefore, the warning sound can reflect on the traveling surface with increased effect.

According to the teaching described above, it is preferred that, when a front end of the front wheel has turned outward in a transverse direction of the vehicle, the front wheel and the horn overlap each other as seen from a direction of the horn axis. In other words, it is preferred that a range of movement of the front wheel, when the direction of the front wheel turns right or left as seen from the direction of the horn axis, overlaps the horn. Preferably, the horn is arranged right or left of the front fork as seen from front or top of the vehicle and the front wheel is moved in the direction of arrangement of the horn. This can reduce the size of the opening since, when the front end of the front wheel deviates from the vehicle center, the horn is disposed in a position so close to the front wheel that the horn overlaps the front wheel as seen from the direction of the horn axis. Consequently, lowering of the durability of the horn can be prevented. The body cover can also be made more compact.

According to the teaching described above, it is preferred that the front cover portion has an imperforate front face. That is, it is preferred that the front cover portion has a closed front face. Accordingly, no horn bores for passage of a sound of the horn are formed in the front face thereof. This can protect the horn properly since there is no possibility of foreign substances entering between the front cover portion and the rear cover portion through horn bores. It is to be noted here that the front fork does not extend through the "horn bores", and therefore the "horn bores" are different from the "opening".

According to the teaching described above, it is preferred that the front fork includes a steering shaft rotatably supported by the head tube; an underbracket connected to a lower part of the steering shaft; and front tubes supported by the underbracket for supporting the front wheel; the horn being disposed above the underbracket. Since the horn is disposed in a position higher than the underbracket, the horn can be protected from foreign substances appropriately.

According to the teaching described above, it is preferred that a front fender is provided for covering an area above the front wheel, the front fender having a top end thereof overlapping the front cover portion when seen from front of the vehicle. With the front fender provided, it can catch flying foreign substances to prevent the foreign substances entering between the front cover portion and the rear cover portion through the opening. Since the front fender is disposed in a position near the opening, it can prevent with increased effect the foreign substances entering between the front cover portion and the rear cover portion.

According to the teaching described above, it is preferred that, when a front end of the front wheel is located at a vehicle center, at least part of the horn is exposed between the body cover and the front fender as seen from a direction of the horn axis. Since at least part of the horn is exposed between the body cover and the front fender as seen from the direction of the horn axis, the volume of the warning sound forward of the vehicle can be secured appropriately. Further, with the body cover and the front fender blocking foreign substances, contamination of the horn can be prevented appropriately.

According to the teaching described above, it is preferred that part of the horn is hidden by the body cover as seen from a direction of the horn axis. The body cover can with increased effect inhibit foreign substances from contacting the horn.

According to the teaching described above, it is preferred that a seat is provided for seating a rider; and a flat footboard is disposed forward and downward of the seat; the rear cover portion extending below the front cover portion; the rear cover portion passing through an area rearward of the front wheel to be connected to the flat footboard. The rear cover portion extends to a position lower than the front cover portion, and extends to a position rearward of the front wheel. Therefore, the warning sound can be inhibited conveniently from leaking rearward. The rear cover portion can also reflect the warning sound to send it forward. Therefore, even where the horn is disposed to have the horn axis extending downward and forward, the warning sound easily proceeds forwards of the saddle riding type vehicle. With the seat and flat footboard provided, the rider can sit on the seat and put the feet on the flat footboard.

According to the teaching described above, it is preferred that a light unit is provided for the front cover portion, the horn being disposed rearward of the light unit. This eliminates a possibility of the light unit interfering with the horn. That is, the freedom for placing the light unit can be increased.

According to the teaching described above, it is preferred that the horn overlaps the light unit as seen from front of the vehicle. This can make vertically compact an installation space for the horn and the light unit. Therefore, the vertical length of the front cover portion can be restrained.

According to the teaching described above, it is preferred that the light unit has at least either a headlight or flashers. The light unit may be formed of both the headlight and flashers. The light unit may be formed of either one. This can increase the freedom for arranging the headlight and flashers.

According to the teaching described above, it is preferred that a horn holding member is supported by the head tube for holding the horn. This can inhibit vibration from being transmitted to the horn. Even when the front fork is moved by a steering operation, for example, the horn will not move relative to the body cover. Therefore, the body cover can be reduced in size. The horn holding member may be supported directly, or may be supported indirectly, by the head tube.

According to the teaching described above, it is preferred that a cover holding member is provided between the front cover portion and the rear cover portion for holding the front cover portion; the cover holding member being approximately V-shaped as seen from front of the vehicle, and having opposite end regions thereof for holding the front cover portion; each of the opposite end regions of the cover holding member being located above the light unit. This allows the light unit to be disposed in a relatively low position of the front cover portion. Therefore, even a large size light unit can easily be attached to the front cover portion.

According to the teaching described above, it is preferred that a mounting member is provided on the front cover portion for attaching a license plate. This allows a license plate to be attached conveniently to the front cover portion.

According to the teaching described above, it is preferred that that the front fender is supported by the underbracket. With this, the front fender does not move up and down relative to the body cover even with extension and contraction of the front tubes. Consequently, entry of foreign substances can be prevented stably.

According to the teaching described above, it is preferred that, when the front end of the front wheel is located at the vehicle center, at least part of the horn is disposed further outward in the transverse direction of the vehicle than a part of the front fork outermost in the transverse direction. According to the teaching described above, it is preferred that, when the front end of the front wheel is located at the vehicle center, at least part of the horn is disposed further outward in the transverse direction of the vehicle than the underbracket and the front tubes. According to these, the warning sound is hardly blocked by the front fork (underbracket and front tubes), but can easily and directly hit the traveling surface from the horn. Consequently, the warning sound can be made to reflect on the traveling surface with increased effect.

### BRIEF DESCRIPTION OF THE DRAWINGS

For the purpose of illustrating the present teaching, there are shown in the drawings several forms which are presently preferred, it being understood, however, that the present teaching is not limited to the precise arrangement and instrumentalities shown.
Fig. 1 is a left side view of a saddle riding type vehicle according to Embodiment 1;
Fig. 2 is a left side view showing structures inside a body cover;
Fig. 3 is a perspective view showing the internal structures of the body cover;
Fig. 4 is a plan view of the saddle riding type vehicle;
Fig. 5 is a front view of the saddle riding type vehicle;
Fig. 6A is a view showing a principal portion of the saddle riding type vehicle seen from the direction of a horn axis;
Fig. 6B is a side view corresponding to Fig. 6A;
Fig. 7 is a view showing the principal portion of the saddle riding type vehicle seen from the direction of the horn axis;
Fig. 8 is a view showing the principal portion of the saddle riding type vehicle seen from the direction of the horn axis;
Fig. 9 is an enlarged view of a principal portion of an inner fender;
Fig. 10 is an exploded perspective view of the body cover and other components;
Fig. 11 is a detail view showing a mounting structure for a front cover portion and a horn;
Fig. 12 is a left side view of a saddle riding type vehicle according to Embodiment 2;
Fig. 13 is a left side view showing structures inside a body cover;
Fig. 14 is a front view of the saddle riding type vehicle;
Fig. 15A is a view showing a principal portion of the saddle riding type vehicle seen from a horn axis;
Fig. 15B is a side view corresponding to Fig. 15A;
Fig. 16 is a side view showing a mounting structure for a front cover portion and a horn;
Fig. 17 is a perspective view showing the mounting structure for the front cover portion
and the horn; and
Fig. 18 is a front view of a saddle riding type vehicle according to a modified embodiment.

### DESCRIPTION OF THE PREFERRED EMBODIMENTS

Preferred embodiments of the present teaching will be described in detail hereinafter with reference to the drawings.

### First Embodiment

A saddle riding type vehicle 1 will be described hereinafter with reference to the drawings. In this embodiment, a scooter type two-wheeled motor vehicle will be described as an example of saddle riding type vehicle 1.

### 1. Outline construction of saddle riding type vehicle

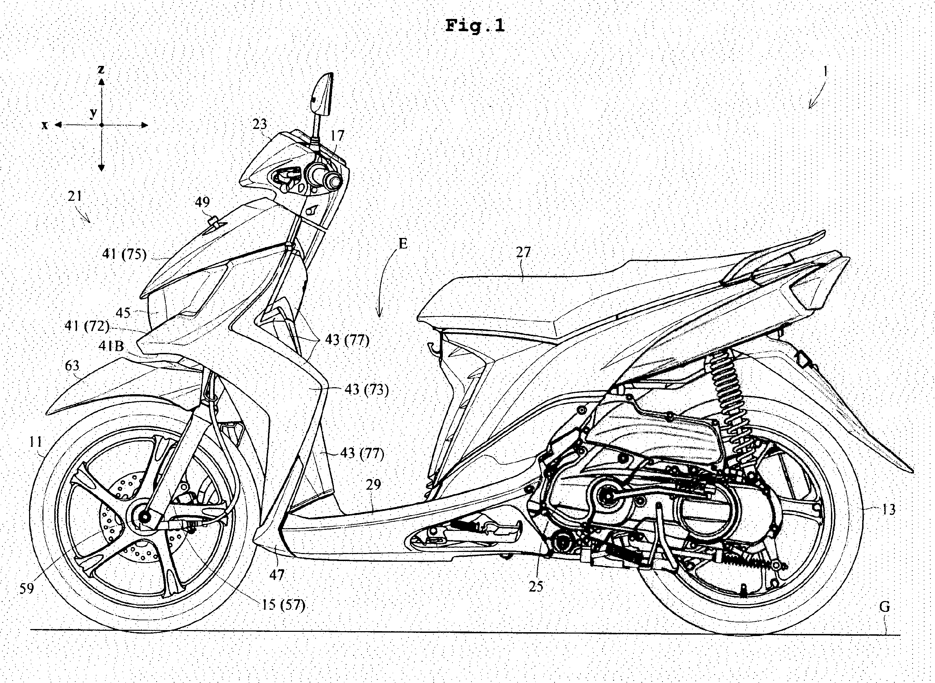

Fig. 1 is a left side view of the saddle riding type vehicle according to Embodiment 1. In Fig. 1, x-direction is a longitudinal direction, y-direction a transverse direction, and z-direction a vertical direction. The front and rear, right and left, and up and down mean the "front", "rear", "left", "right", "up" and "down" as seen from the rider mounted on the saddle riding type vehicle 1.

Referring to Fig. 1, the saddle riding type vehicle 1 has a front wheel 11 and a rear wheel 13. The front wheel 11 is supported by a front fork 15. The front fork 15 is connected to a handlebar 17. Part of the front fork 15 is covered by a body cover 21. A handlebar cover 23 is attached to the handlebar 17. The rear wheel 13 is supported by an engine unit 25 of the unit swing type. The engine unit 25 drives and rotates the rear wheel 13.

The saddle riding type vehicle 1 has a seat 27 for the rider to sit on, and a flat footboard 29 for supporting the rider's feet. The seat 27 is disposed rearward of the handlebar 17. A hollow space (recess) E is formed between the seat 27 and body cover 21. This allows the rider to board and alight from the saddle riding type vehicle 1 with ease. The flat footboard 29 is disposed forward of the seat 27 and below the seat 27. The flat footboard 29 has a substantially flat upper surface. That is, the upper surface of the flat footboard 29 is not limited to being strictly flat, but may be slightly ragged. The rider rides the saddle riding type vehicle 1 as seated on the seat 27, with the rider's feet resting on the flat footboard 29, and the hands gripping the handlebar 17.

### 2. Body cover and structures in its interior - head tube, front fork

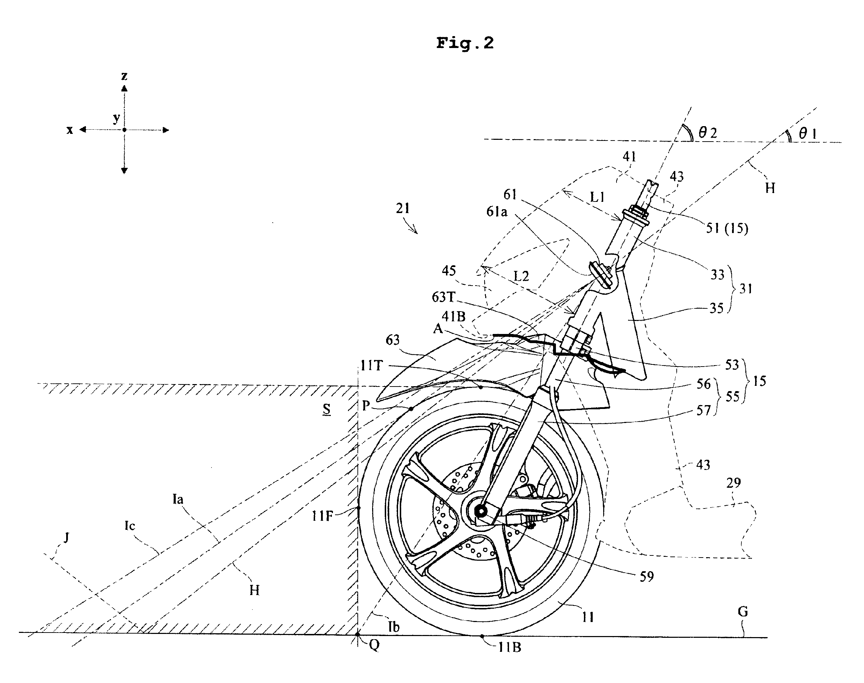

Fig. 2 is the left side view showing structures inside the body cover 21. In Fig. 2, the body cover 21 is shown in dotted lines, and the structures inside the body cover 21 are shown in solid lines.

As seen, the saddle riding type vehicle 1 has a body frame 31. The body frame 31 includes a head tube 33 and a single down frame 35. The head tube 33 is located at the front end of the body frame 31. The down frame 35 extends rearward and downward from the head tube 33. The body frame 31 fixedly supports the body cover 21. The head tube 33 rotatably supports the front fork 15. The front wheel 11 is supported by lower parts of the front fork 15.

The body cover 21 is formed to cover areas forward and rearward of the head tube 33. In this specification, the portion of the body cover 21 present forward of the head tube 33 is called "front cover portion 41 ", and the portion present rearward of the head tube 33 "rear cover portion 43".

As seen from a side of the vehicle, the front cover portion 41 has a front face basically slanting forward and downward. In other words, as seen from a side of the vehicle, a lower part of the front cover portion 41 protrudes further forward than an upper part. The front face of the front cover portion 41 means a surface exposed outward.

As seen from a side of the vehicle, the distance from the head tube 33 to the front face of the front cover portion 41 increases from top to bottom. By way of example, Fig. 2 shows a distance L1 from an upper part of the head tube 33 to the front face of the front cover portion 41, and a distance L2 from a lower part of the head tube 33 to the front face of the front cover portion 41. Distances L1 and L2 are distances measured in directions perpendicular to the head tube 33, respectively. Distance L2 is larger than distance L1. It will be clear from this that the space between the front cover portion 41 and rear cover portion 43 is progressively larger toward the lower end. In other words, the internal space of the body cover 21 enlarges downward.

The front cover portion 41 has a headlight unit 45 (also see Fig. 1). The headlight unit 45 is located forward of the head tube 33. The headlight unit 45 is located in a relatively low position of the front cover portion 41. The headlight unit 45 includes a headlight (head lamp) and flashers (direction indicators). The headlight unit 45 corresponds to the light unit in the present teaching.

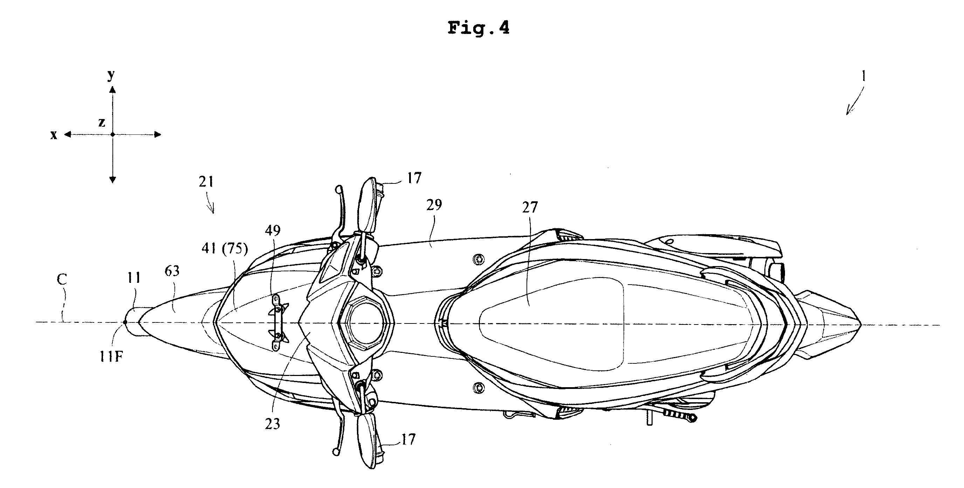

The front cover portion 41 is disposed in a position higher than the front wheel 11. That is, the front cover portion 41 has a lower surface 41 B thereof higher than the front wheel 11. When seen from top, the lower surface 41 B of the front cover portion 41 is invisible, but the front face of the front cover portion 41 is visible when seen from front. The plan view of Fig. 4 to be described hereinafter does not depict the lower surface 41 B of the front cover portion 41, but depicts the front face of the front cover portion 41.

The rear cover portion 43 extends downward to a position lower than the front cover portion 41. The rear cover portion 43 extends rearward of the front wheel 11. The rear cover portion 43 hangs down to a position lower than a top end 11 T of the front wheel 11. The rear cover portion 43 covers areas rearward of the head tube 33 and down frame 35. The rear cover portion 43 is connected at a lower part thereof to a front part of the flat footboard 29. The hollow space E noted hereinbefore is formed between the rear cover portion 43 and the seat 27.

The front cover portion 41 and the rear cover portion 43 are continuous with each other laterally of the head tube 33.

The body cover 21 has an opening A formed for permitting the front fork 15 to extend therethrough. Fig. 2 schematically shows, in a thick line, a position in which the opening A is formed. The opening A is defined by the front cover portion 41 and rear cover portion 43. A front part of the opening A is defined by a lower surface 41 B of the front cover portion 41. A rear part of the opening A is defined by the rear cover portion 43. A virtual slice plane including the opening A is provided mainly by the lower surface 41 B of the front cover portion 41. Therefore, an opening formed in the lower surface 41 B of the front cover portion 41 substantially corresponds to the front part of the opening A. A line at which the virtual slice plane and the rear cover portion 43 intersect provides an outline of the rear part of the opening A.

The position of the opening A is lower than the head tube 33. The front fork 15 extends through the opening A to be present inside and outside the body cover 21. The front wheel 11 is located below the opening A.

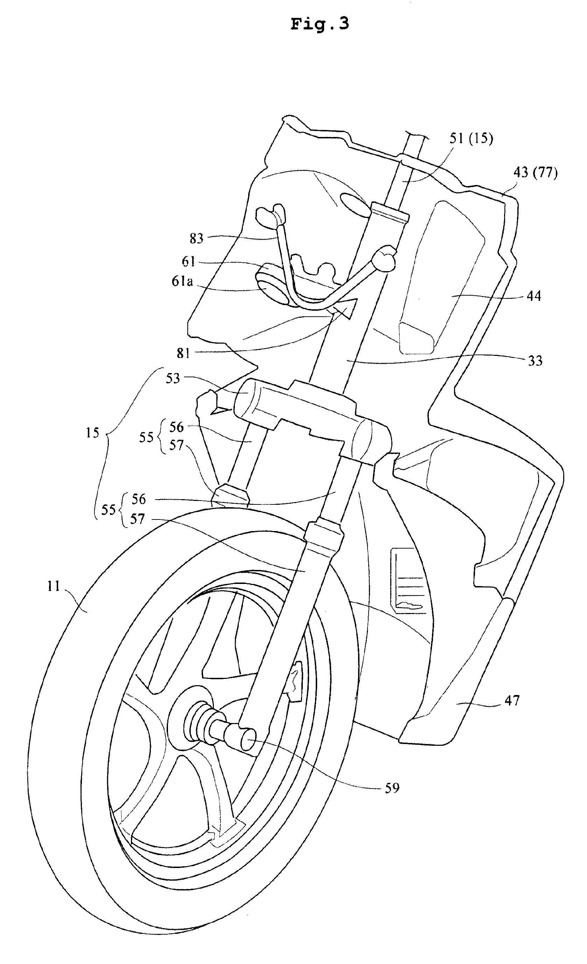

Fig. 3 is a perspective view showing the internal structures of the body cover 21. Fig. 3 is a view of the saddle riding type vehicle 1 seen from an upper left forward position. The front cover portion 41 (more strictly, a first and a second members 71 and 75 described hereinafter) is omitted from Fig. 3.

As shown, a storage case 44 is formed in the rear cover portion 43 for keeping accessories and the like therein. The storage case 44 is formed in a region where an inner surface of the rear cover portion 43 bulges substantially forward. The storage case 44 is disposed to the left of the head tube 33. The storage case 44 has an opening (not shown) formed in a rear surface of the rear cover portion 43. The inner surface of the rear cover portion 43 is mainly a surface not exposed outside. The rear surface of the rear cover portion 43 is a surface exposed outside to be opposed to the seat 27. In Fig. 3, mainly the inner surface of the rear cover portion 43 is visible.

The rear cover portion 43 has an inner fender 47. The inner fender 47 is located in a lower part of the rear cover portion 43. The inner fender 47 blocks foreign substances thrown up by the front wheel 11, such as water, mud and gravel, for example. The inner fender 47 has a rib. The rib can block the foreign substances with increased effect (the rib will be described hereinafter). The inner fender 47 can effectively prevent the foreign substances from contaminating lower rear parts of the rear cover portion 43 or intruding between the front cover portion 41 and the rear cover portion 43.

In this Embodiment 1, a line at the upper end of the inner fender 47 substantially corresponds to the outline of a rear part of the opening A noted hereinbefore.

The front fork 15 includes a steering shaft 51, an underbracket 53 and a pair of front tubes 55. The steering shaft 51 is supported by the head tube 33 to be rotatable about its own axis. The underbracket 53 is connected to a lower part of the steering shaft 51. The front tubes 55 are supported by opposite end regions of the underbracket 53, respectively.

The handlebar 17 noted hereinbefore is connected to an upper part of the steering shaft 51. The front wheel 11 is supported by the pair of front tubes 55. A steering operation of the handlebar 17 will rotate the steering shaft 51 relative to the head tube 33. The underbracket 53 and the pair of front tubes 55 will turn with the steering shaft 51. This changes the direction of the front wheel 11.

Each front tube 55 is extendable and contractible. Each front tube 55 has an inner tube 56 and an outer tube 57. An upper part of the inner tube 56 is fixed to the underbracket 53. A lower part of the inner tube 56 is inserted in the outer tube 57. The inner tube 56 is axially movable relative to the outer tube 57. The right and left outer tubes 57 support an axle 59. The front wheel 11 is rotatably supported by this axle 59.

Referring to Fig. 2, the steering shaft 51 is disposed in a position higher than the opening A. The position of the underbracket 53 is at substantially the same height as the opening A. Although upper ends of the front tubes 55 are located at substantially the same height as the opening A, large parts of the front tubes 55 are located in positions lower than the opening A. The positions of the underbracket 53 and front tubes 55 are lower than the head tube 33.

### 3. Horn and front fender

Referring to Figs. 2 and 3, a horn (electric horn) 61 is mounted between the front cover portion 41 and the rear cover portion 43. The horn 61 produces a warning sound. With the warning sound, it alerts mainly other vehicles or persons. The horn 61 has a front face 61 a which emits the sound. The horn 61 is what is called the disc type, and the front face 61 a is formed of a vibrating plate or resonant plate, for example.

Referring to Fig. 2, the horn 61 is disposed in a position higher than the opening A. More particularly, the position of a lower end of the horn 61 is higher than the opening A. The horn 61 is disposed in a position higher than the underbracket 53. The horn 61 is disposed in a position higher than the lower end of the head tube 33. As seen from a side of the vehicle, at least part of the horn 61 overlaps the head tube 33. As seen from a side of the vehicle, at least part of the horn 61 overlaps the front fork 15 (steering shaft 51). More particularly, the front end of the horn 61 is located forward of a front edge of the front fork 15 (steering shaft 51). The rear end of the horn 61 is located rearward of the front edge of the front fork 15 (steering shaft 51). The horn 61 is located rearward of the headlight unit 45.

As seen from a side of the vehicle, the entire horn 61 overlaps the body cover 21 (front cover portion 41 and rear cover portion 43). That is, the horn 61 is not located forward of the body cover 21 or rearward of the body cover 21. An area forward of the horn 61 is covered by the front cover portion 41 (headlight unit 45), and an area rearward of the horn 61 is covered by the rear cover portion 43. As shown in Fig. 1, as seen from a side of the vehicle, the horn 61 is hidden by the body cover 21, and is not exposed. That is, areas laterally of the horn 61 are also covered by the body cover 21.

Here, a virtual line perpendicular to the front face 61 a of the horn 61 is called "horn axis H". The horn axis H extends through the center of the front face 61 a of the horn 61. The center of the front face 61a is set as appropriate according to the shape and the like of the front face 61a. The warning sound emitted from the horn 61 propagates in an outspreading fashion. The horn axis H schematically indicates the center from which the warning sound spreads out. In this embodiment, the horn axis H is set as follows.

Firstly, the horn axis H extends downward and forward of the horn 61. Secondly, the horn axis H extends toward a position further forward than the front wheel 11. Thirdly, the horn axis H overlaps the front wheel 11 as seen from a side of the vehicle. Here, "further forward than the front wheel 11" is synonymous with "forward of the front wheel 11 as seen from a side", and specifically means an area S as shown in Fig. 2. The area S is an area forward of a front end 11 F of the front wheel 11, below the top end 11 T of the front wheel 11, and above a bottom end 11 B of the front wheel 11. Therefore, "the horn axis H extends forward of the front wheel 11" or "the horn axis H extends toward a position further forward than the front wheel 11" is synonymous with the horn axis H passing through the area S, and is synonymous with the point where the horn axis H meets the traveling surface G being located further forward than the front end 11 F of the front wheel 11.

Fig. 2 shows, for reference, a virtual line la extending through the horn 61 and tangent to the front wheel 11 at point P, and a virtual line 1b linking the horn 61 and an end point Q at the rear end and lower end of the area S. Not only the horn axis H shown but horn axes within the range from the virtual line la to the virtual line lb will satisfy the first to third conditions noted above.

The inclination of the horn axis H is closer to the horizontal than the inclination of the head tube 33. Fig. 2 shows, by way of example, an angle θ1 relative to the horizon of the horn axis H and an angle θ2 relative to the horizon of the head tube 33. The angle θ1 is smaller than the angle θ2.

As clearly shown in Fig. 2, and as seen from a side of the vehicle, the horn axis H extends through an area forward of the front fork 15.

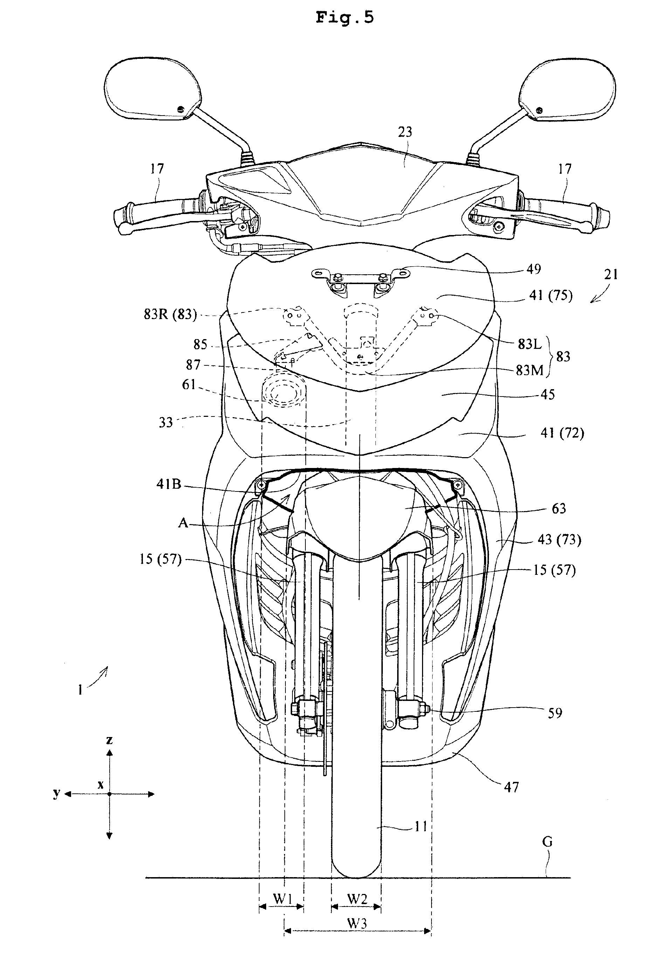

Fig. 4 is a plan view of the saddle riding type vehicle 1. As shown in Fig. 4, when the direction of the front wheel 11 is in agreement with the longitudinal direction x, the front end 11 F of the front wheel 11 is located at the vehicle center C in the transverse direction y. Fig. 5 is a front view of the saddle riding type vehicle 1. Fig. 5 shows the saddle riding type vehicle 1 when the front end 11 F of the front wheel 11 is located at the vehicle center C. This applies also to Figs. 1 to 3. Further, Fig. 5 clearly shows the opening A in a thick line.

As shown in Fig. 5, the horn 61 is disposed to the right of the head tube 33. As seen from the front, the horn 61 overlaps the headlight unit 45. That is, the horn 61 is disposed right behind the headlight unit 45. As seen from the front, the entire horn 61 overlaps the body cover 21 (front cover portion 41 and rear cover portion 43). That is, the horn 61 is not located laterally outside of the body cover 21. The opposite sides of the horn 61 are covered by the body cover 21. The front face of the front cover portion 41 has no horn bore for passing the warning sound of the horn 61. That is, the front face of the front cover portion 41 is closed. In other words, the front face of the front cover portion 41 is imperforate. An area forward of the horn 61 is covered by the headlight unit 45.

The position of the horn 61 in the transverse direction y is displaced from the position of the front wheel 11 in the transverse direction y. More particularly, when the front end 11 F of the front wheel 11 is located at the vehicle center C, the horn 61 is located to the right of the front wheel 11 in the transverse direction y. Fig. 5 shows a range W1 in which the horn 61 is located in the transverse direction y, and a range W2 in which the front wheel 11 is located in transverse direction y. As seen from the front, the range W1 does not overlap the range W2, but is displaced to the right of the range W2.

A mounting member 49 for attaching a license plate is disposed on the front face of the front cover portion 41 (see also Fig. 1). The mounting member 49 is disposed in a relatively high position on the front cover portion 41. As seen from the front, the mounting member 49 is disposed above the headlight unit 45.

Referring to Figs. 1, 2 and 5, a front fender 63 is supported by the underbracket 53. The front fender 63 is rotatable with the underbracket 53. The front fender 63 covers an area over the front wheel 11. The front fender 63 blocks foreign substances thrown up by the front wheel 11.

As shown in Fig. 2, as seen from a side of the vehicle, a portion (hereinafter called the "top end") 63T of the front fender 63 protrudes to an area between the front cover portion 41 and the rear cover portion 43 through the opening A. In other words, the top end 63T is located above the opening A. As shown in Fig. 5, as seen from the front, the front fender 63 overlaps the front cover portion 41. As seen from the front, the top end 63T is hidden by the front cover portion 41.

The horn 61 is disposed in a position higher than the front fender 63. When the front end 11 F is located at the vehicle center C, at least part of the horn 61 is located outward of the front fender 63 in the transverse direction y. More particularly, part of a range in the transverse direction y where the horn 61 is located is displaced from the position of the front fender 63 in the transverse direction y. Fig. 5 shows a range W3 in which the front fender 63 is located in the transverse direction y. As seen from the front, part of the range W1 is displaced to the right of the range W3, and the remaining part of the range W1 overlaps the range W3.

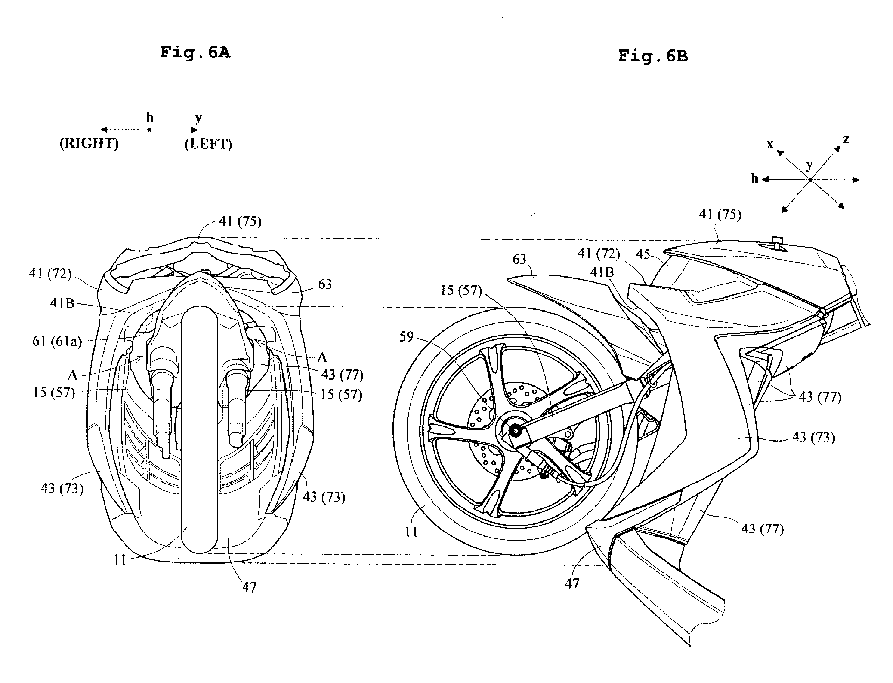

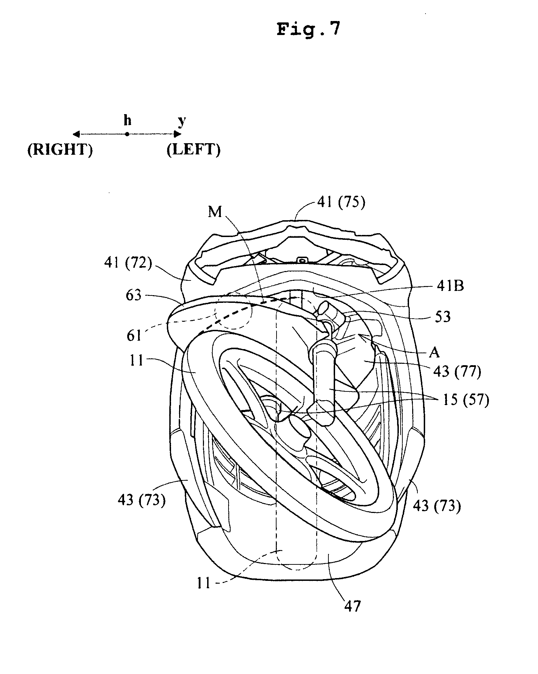

Reference is made to Figs. 6A and 6B. Fig. 6A is a view of the saddle riding type vehicle 1 seen from the direction of horn axis H. Fig. 6B is a side view corresponding to Fig. 6A of the saddle riding type vehicle 1. In Figs. 6A and 6B, the front end 11 F of the front wheel 11 is located at the vehicle center C. The headlight unit 45 and other components are omitted from Fig. 6A. In Figs. 6A and 6B, the right in the transverse direction y is indicated "RIGHT", the left in the transverse direction y "LEFT", and an axis parallel to the horn axis H "h". This applies also to Figs. 7 to 9 described hereinafter.

As shown in Fig. 6A, a part (front part) of the opening A is defined by the lower surface 41 B of the front cover portion 41. When seen from the direction of horn axis H, a central portion of the opening A is covered by the front fender 63. A right portion and a left portion of the opening A are not covered by the front fender 63. That is, gaps between the front cover portion 41 and the front fender 63 are formed in the right portion and left portion of the opening A. Through these right and left gaps, areas between the front cover portion 41 and the rear cover portion 43 (interiors of the body cover 21) are visible.

The horn 61 is visible (exposed) in the opening A when seen from the direction of horn axis H. The horn 61 is exposed from between the front cover portion 41 and the front fender 63. The position in which the horn 61 is exposed is a front portion of the opening A. More particularly, the position in which the horn 61 is exposed is a forward and rightward edge region in the opening A. The position in which the horn 61 is exposed is to the right of the front fender 63. Of the right and left gaps between the front cover portion 41 and the front fender 63, the position in which the horn 61 is exposed is near a front end of the right gap.

The horn 61 is not exposed in its entirety, but only part of the front face 61a is exposed. The remaining portions of the front face 61a are hidden behind the front cover portion 41 or the front fender 63, and are not exposed. The exposed portion of the horn 61 is now called the "first portion", and the unexposed portions of the horn 61 the "second portions". The second portions are separately formed at opposite sides of the first portion. One of the second portions overlaps a forward and right region of a lower part of the front cover portion 41, the other of the second portions overlaps a right region of the front fender 63.

Reference is made to Fig. 7. Fig. 7 is a view of the saddle riding type vehicle 1 seen from the direction of horn axis H when the front wheel 11 is turned. In Fig. 7, the front end 11 F of the front wheel 11 has been turned outward in the transverse direction y. More particularly, the front end 11 F is located to the right of the vehicle center C. For reference, the chain line shows the position of the front wheel 11 when the front end 11 F is located at the vehicle center C. Further, the thick dotted line shows a movable range M of the front wheel 11 when the front end 11 F is turned.

As shown, when the front end 11 F is turned (when the direction of the front wheel 11 changes), the front fender 63 will also rotate with the front wheel 11. Seen from the direction of horn axis H, the entire horn 61 overlaps the front fender 63, and is not exposed. The horn 61 and the front wheel 11 do not overlap in the situation shown in Fig. 7. However, as is clear from the fact that the movable range M overlaps the horn 61, when the front end 11 F is turned, at least part of the horn 61 overlaps the front wheel 11.

Of the right and left gaps formed between the front cover portion 41 and the front fender 63, the right gap diminishes and eventually disappears (the gap becomes covered completely) with turning of the front end 11 F. On the other hand, the left gap grows larger with turning of the front end 11 F.

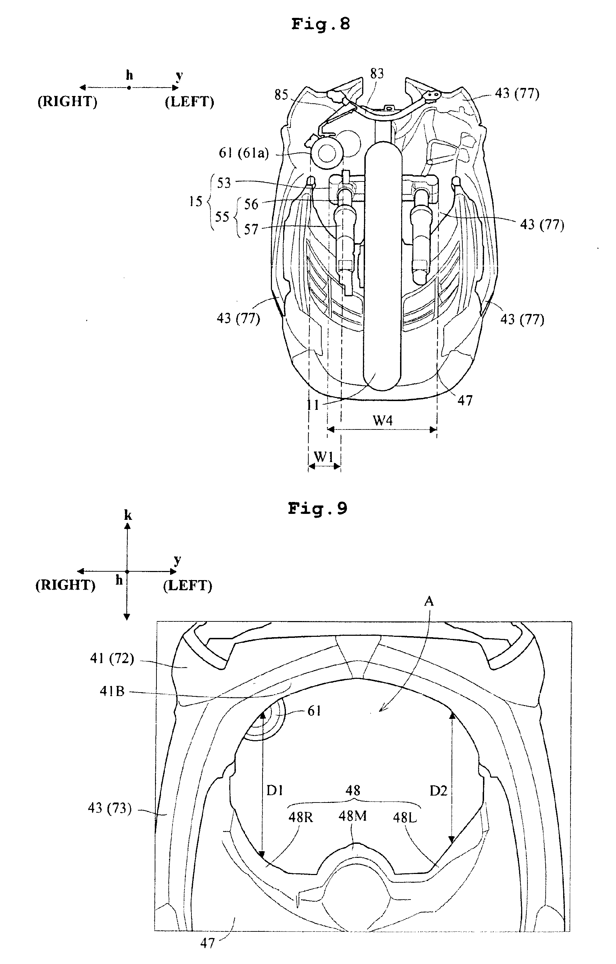

Fig. 8 is shown as reference. Fig. 8 is a view of the saddle riding type vehicle 1 seen from the direction of horn axis H, from which the front cover portion 41 and front fender 63 are omitted.

If, as shown, the front cover portion 41 and the front fender 63 do not exist when seen from the direction of horn axis H, the entire front face 61 a of the horn 61 is visible. That is, as seen from the direction of horn axis H, the horn 61 does not overlap the front fork 15. Naturally, the position of the horn 61 is displaced also from the underbracket 53. Further, as seen from the direction of horn axis H, the horn 61 does not overlap the front wheel 11 when the front end 11 F is located at the vehicle center C. As seen from the direction of horn axis H, the horn 61 is located outward of the front wheel 11 in the transverse direction y when the front end 11 F is located at the vehicle center C. Further, as seen from the direction of horn axis H, the horn 61 is not hidden in the rear cover portion 43 (inner fender 47).

The positional relationship in the transverse direction y between the horn 61 and the front fork 15 is clearly shown in Fig. 8. Fig. 8 shows the position (range) W1 of the horn 61 in the transverse direction y, and a position (range) W4 of the front fork 15 in the transverse direction y. The range W4 is a maximum width of the front fork 15. In this Embodiment 1, the width of the underbracket 53 corresponds to the width W4.

### 4. Characteristic shape of inner fender

Next, the rib of the inner fender 47 will be described. Fig. 9 is an enlarged view of a principal portion of the inner fender 47. Fig. 9 is a view of the saddle riding type vehicle 1 seen from the direction of horn axis H, from which the front wheel 11 and other components are omitted.

As seen, rib 48 is formed in the upper part of inner fender 47. The rib 48 is elevated substantially forward from the inner fender 47. The rib 48 is divided into a middle rib 48M, a right rib 48R and a left rib 48L. The middle rib 48M bulges forward to follow the down frame 35. The middle rib 48M covers an area forward of the down frame 35. The right rib 48R and left rib 48L overhang forward like eaves. The right rib 48R and left rib 48L block foreign substances thrown up by the front wheel 11, respectively.

The rib 48 is shaped right and left asymmetrical. Of the right and left ribs 48R and 48L, the right rib 48R which is on the same side as the horn 61 has a shorter overhang length than the left rib 48L. As a result, the right portion of the opening A is larger than the left portion of the opening A. Fig. 9, with axis k set as an axis extending perpendicular to the transverse direction y and axis h, shows a length D1 of the right portion of the opening A in the direction of axis k, and a length D2 of the left portion of the opening A along axis k. Length D1 is longer than length D2.

### 5. Construction of body cover

The construction and the like of the body cover 21 will be described. The body cover 21 noted hereinbefore is constructed of a plurality of separable members. The plurality of members may not necessarily be in agreement with the front cover portion 41 or the rear cover portion 43. The plurality of members may include members which serve also as the front cover portion 41 and the rear cover portion 43. One example of construction of the body cover 21 will be described hereinafter.

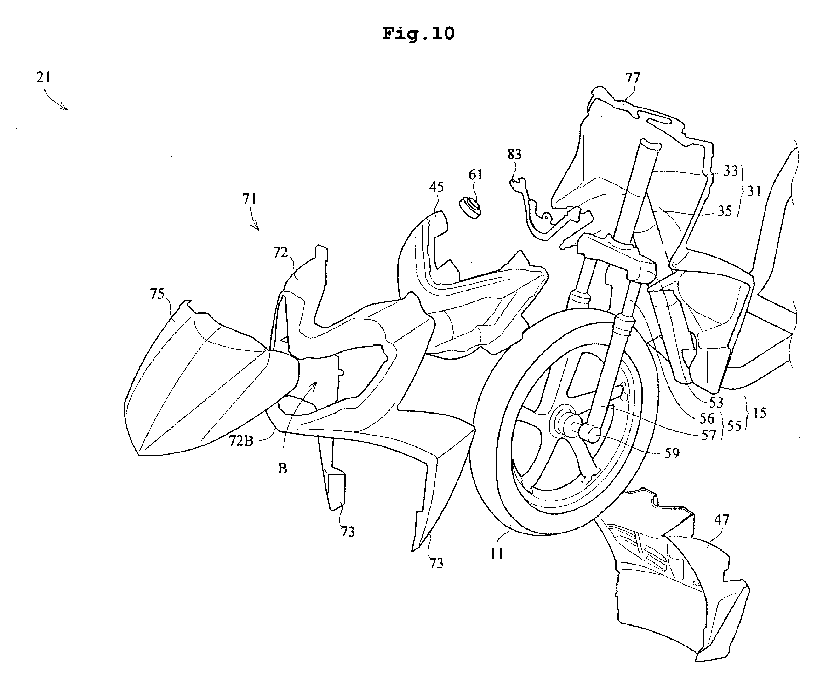

Fig. 10 is an exploded perspective view of the body cover 21 and other components. As seen, the body cover 21 is separable into a first member 71, a second member 75, a third member 77 and the inner fender 47. The first member 71 has a central part 72 and a pair of right and left legs 73 extending substantially downward from the central part 72. The central part 72 has a headlight unit opening B formed in a front face thereof for mounting the headlight unit 45. When the headlight unit 45 has been attached to the first member 71, the headlight unit opening B is closed. The second member 75 is attached to an upper portion of the first member 71 (central part 72). The third member 77 is connected to the first and second members 71 and 75 across the head tube 33. The inner fender 47 is attached to a lower portion of the third member 77. The respective legs 73 are joined to the opposite sides of the inner fender 47.

In the above example of division, the front cover portion 41 is constructed of a part of the first member 71 (e.g. central part 72) and the whole of the second members 75 (see Fig. 1). A lower surface 72B of the central part 72 corresponds to the lower surface 41 B of the front cover portion 41. The rear cover portion 43 is constructed of parts (e.g. legs 73) of the first member 71, the third member 77 and the inner fender 47 (see Fig. 1).

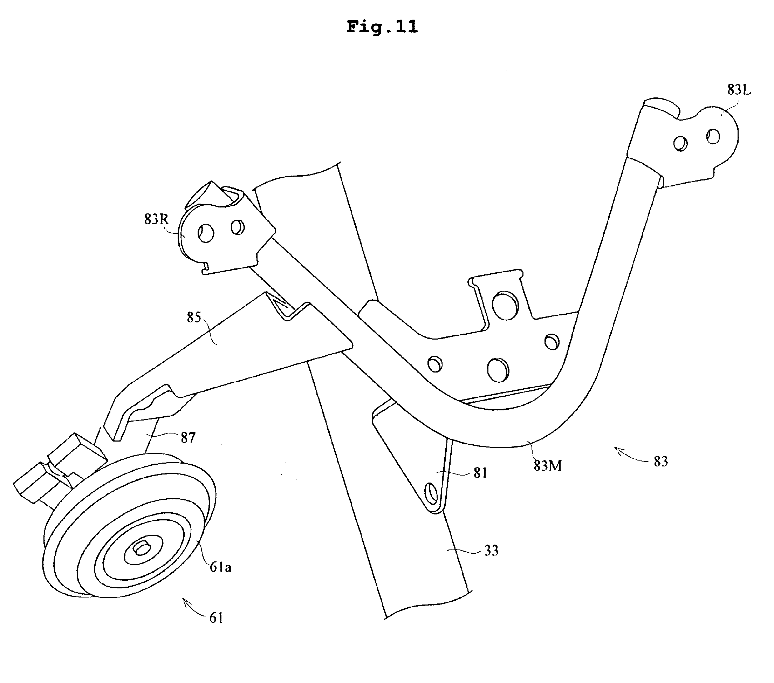

Reference is made to Figs. 10 and 11. Fig. 11 is a detail view showing a mounting structure for the front cover portion 41 and the horn 61. Between the front cover portion 41 and the rear cover portion 43 are a stay member 81 and a cover holding member 83 for supporting the front cover portion 41.

The stay member 81 is attached to the head tube 33. The stay member 81 projects forward from the head tube 33. The cover holding member 83 is attached to a forward end portion of the stay member 81.

Referring to Fig. 5, the cover holding member 83 has a shape corresponding to the headlight unit 45. Specifically, the headlight unit 45 is approximately V-shaped when seen from the front. To correspond to this, the cover holding member 83 also is approximately V-shaped when seen from the front. The cover holding member 83 has a middle part 83M and right and left ends 83R and 83L. The positions of the right and left ends 83R and 83L are to opposite sides of the middle part 83M in the transverse direction y, and are higher than the middle 83M.

The cover holding member 83, as seen from the front, is disposed not to overlap the headlight unit 45. In this embodiment, as seen from the front, the position of the middle part 83M is higher than a middle part of the headlight unit 45, and lower than ends of the headlight unit 45. The positions of the respective ends 83R and 83L are higher than the headlight unit 45 as a whole. The front cover portion 41 (first member 71) is attached to these ends 83R and 83L. In this way, the front cover portion 41 is supported by the head tube 33.

Referring to Fig. 11, further provided between the front cover portion 41 and the rear cover portion 43 are a horn holding member 85 and a horn stay member 87 for supporting the horn 61.

As seen, the horn holding member 85 is supported by a portion between the middle part 83M and the right end 83R of the cover holding member 83. The horn holding member 85 extends rightward and rearward from the cover holding member 83. The horn stay member 87 is attached to a distal end of the horn holding member 85. The horn stay member 87 holds the horn 61. In this way, the horn 61 is supported by the head tube 33.

### 6. How warning sound propagates

Referring to Fig. 2, in the saddle riding type vehicle 1 having the above construction, when the horn 61 emits a warning sound, the warning sound will propagate between the front cover portion 41 and the rear cover portions 43, while spreading in directions centering on the horn axis H. That is, the warning sound propagates in directions centering on the downward and forward direction from the horn 61. And the warning sound exits the body cover 21 through the opening A. At this time, the warning sound passes through the opening A between the front cover portion 41 and the front fender 63, whereby the warning sound can directly exit to the outside. The warning sound having exited to the outside reflects on a traveling surface G forward of the front wheel 11 and proceeds further forward. Fig. 2 schematically shows, by way of example, a direction of movement J of the warning sound after the reflection. Thus, the warning sound is propagated forward of the saddle riding type vehicle 1 using the reflection on the traveling surface G. Consequently, the warning sound can be given in an appropriate volume forward of the saddle riding type vehicle 1.

Thus, in order to fulfill the object of inhibiting lowering of durability of the horn 61 while securing a sufficient volume of the warning sound forward of the saddle riding type vehicle 1, Inventors herein have directed their attention to the opening (A) for receiving the front fork 15. The front fork 15 extends through the opening, but does not extend through the horn bores. Usually, therefore, the opening is sufficiently larger than the horn bores. However, the opening is directed toward the front wheel 11. Usually, therefore, the opening is directed downward rather than forward as seen from the interior of the body cover. Thus, there has been no technical concept to release the warning sound through this opening.

Inventors herein have changed their way of thinking away from the common technical knowledge, and attained use of the opening for receiving the front fork 15 also for releasing the warning sound. Inventors have also attained a construction for appropriately transmitting the warning sound forward of the saddle riding type vehicle 1 even when the warning sound is released through the opening for receiving the front fork 15.

That is, according to the saddle riding type vehicle 1 in this Embodiment 1, as described above, the horn 61 is exposed from the opening A as seen from the direction of horn axis H when the front end 11 F of the front wheel 11 is located at the vehicle center C. Thus, the warning sound emitted from the horn 61 can proceed linearly through the opening A to the exterior of the body cover 21. Since the warning sound can be taken out directly to the exterior of the body cover 21 in this way, lowering of the volume of the warning sound can be inhibited. This opening A is relatively large since it serves to receive the front fork 15. Thus, the warning sound released to the exterior of the body cover 21 can have a relatively large volume.

Since the horn axis H extends downward and forward of the horn 61, the warning sound can reflect on the traveling surface G to proceed forward. Since the horn axis H extends further forward than the front wheel 11, the warning sound can reflect on the traveling surface G forward of the front wheel 11. Consequently, the warning sound can be sent appropriately forward, and the volume of the warning sound forward of the saddle riding type vehicle 1 can be secured appropriately.

Thus, since the horn axis H extends downward and forward of the horn 61 and the warning sound emitted from the horn 61 exits the body cover 21 through the opening A, the front cover portion 41 having no horn bore can be employed as exemplified in this embodiment. With this front cover portion 41, foreign substances are prevented from entering between the front cover portion 41 and the rear cover portion 43, thereby conveniently to inhibit lowering of the durability of the horn 61. That is, even if the opening A is directed downward, this Embodiment 1 can, at the same time, inhibit lowering of the durability of the horn 61 and appropriately transmit the warning sound of the horn 61 forward. Not only the horn 61 but also electric components such as the headlight unit 45 can be protected conveniently from the foreign substances, thereby conveniently to improve the durability of electric components. Further, the headlight unit 45, license plate and so on can be installed in arbitrary positions on the front face of the front cover portion 41. This can cope with enlargement of the headlight unit 45 conveniently. Further, the body cover 21 can be given a neat outward appearance.

The horn axis H extends downward and forward of the horn 61 and the warning sound emitted from the horn 61 exits the body cover 21 through the opening A. This can increase the freedom for placement of the headlight unit 45, such as placing the headlight unit forward of the horn 61, as exemplified in this embodiment.

As seen from the direction of horn axis H, when the front end 11 F of the front wheel 11 is located at the vehicle center C, only part of the horn 61 is exposed from the opening A. This arrangement can effectively send the warning sound to the exterior of the saddle riding type vehicle 1, while inhibiting the horn 61 becoming stained with foreign substances. Since the horn 61 is exposed between the body cover 21 and the front fender 63, the body cover 21 and the front fender 63 can block foreign substances to protect the horn 61 conveniently. Further, each of the front cover portion 41 and the front fender 63 overlaps part of the horn 61, thereby to prevent contamination of the horn 61 with increased effect.

The body cover 21 with the internal space thereof enlarging downward can conveniently lead the warning sound produced by the horn 61 to the opening A. This can inhibit the warning sound becoming muffled inside the body cover 21.

The rib 48 of the inner fender 47 is formed to be right and left asymmetrical, whereby the right portion of the opening A which is on the same side as the horn 61 is larger than the left portion of the opening A. Consequently, the warning sound can pass through the opening A smoothly. This can inhibit, with increased effect, the warning sound becoming muffled inside the body cover 21.

Since the horn axis H overlaps the front wheel 11 as seen from a side of the vehicle, the warning sound can reflect on a portion of the traveling surface G relatively close to the front wheel 11 as seen from the side. Consequently, the warning sound can reflect more properly and the volume of the warning sound forward of the saddle riding type vehicle 1 can be secured appropriately. The size in the longitudinal direction x of the opening A can be reduced, thereby to restrain the length in the longitudinal direction x of the body cover 21. As a result, foreign substances can conveniently be inhibited from entering the body cover 21 through the opening A.

Since the inclination of the horn axis H is closer to the horizontal than the inclination of the head tube 33, the horn axis H can easily be set to extend further forward than the front wheel 11.

When the front end 11 F of the front wheel 11 is located at the vehicle center C, the horn 61 is located laterally of the front wheel 11 in the transverse direction y as seen from the front. Thus, the warning sound is not easily blocked by the front wheel 11, but easily hits the traveling surface G directly from the horn 61. Therefore, the warning sound can reflect on the traveling surface G with increased effect.

When the front end 11 F of the front wheel 11 is located at the vehicle center C, a part of the horn 61 is displaced in the transverse direction y sideways from the front fender 63 as seen from the front. Thus, the warning sound is not easily blocked by the front fender 63, but easily hits the traveling surface G directly from the horn 61. Consequently, lowering of the volume of the warning sound can be inhibited. Since the other part of the horn 61 overlap the position W3 of the front fender 63 in the transverse direction y as seen from the front, the horn 61 is effectively less subjected to foreign substances.

When the front end 11 F of the front wheel 11 is located at the vehicle center C, at least part of the horn 61 is displaced outward in the transverse direction y from the front fork 15. Thus, the warning sound is not easily blocked by the front fork 15 (underbracket 53 and front tubes 55), but easily hits the traveling surface G directly from the horn 61. Therefore, the warning sound can reflect on the traveling surface G with increased effect. Further, as seen from a side of the vehicle, the horn 61 can be disposed to have at least part of the horn 61 overlap the front fork 15. This will be able not only to inhibit lowering of the volume of the warning sound, but to reduce easily the length in the longitudinal direction x of the body cover 21.

When the front end 11 F turns outward in the transverse direction y, the horn 61 overlaps the front wheel 11 as seen from the direction of horn axis H. Since, as noted above, the horn 61 is disposed in a position close to the front wheel 11 as seen from the direction of horn axis H, the opening A can be further reduced in size. This allows the body cover 21 to be made compact. Further, since the horn 61 is disposed to overlap the front fender 63 as seen from the direction of horn axis H when the front end 11 F turns outward in the transverse direction y, the opening A can be further reduced in size, allowing the body cover 21 to be made compact.

As illustrated in Fig. 7, when the front end 11 F turns outward in the transverse direction y, the horn 61 is hidden by the front wheel 11 or the front fender 63 as seen from the direction of horn axis H. This can conveniently prevent foreign substances from acting on the horn 61 when the distance between the horn 61 and the traveling surface G is reduced due to leaning of the saddle riding type vehicle 1.

Even if the horn 61 is hidden as seen from the direction of horn axis H when the front end 11 F turns outward in the transverse direction y, the warning sound emitted from the horn 61 can come out to the exterior of the body cover 21 through the opening A since either one of the right and left gaps formed between the front cover portion 41 and the front fender 63 becomes large. In the first place, the frequency in use of the horn 61 itself is considered lower when the rider is steering the handlebar 17 than when not steering it. The term "when ... steering the handlebar 17" means a time of adjusting the direction of the front wheel 11 so that the position of the front end 11 F will become a position spaced from the body center C. The term "when ... not steering the handlebar 17" means a time of adjusting the direction of the front wheel 11 so that the position of the front end 11 F will be at the body center C.

Since the horn 61 does not overlap the front wheel 11 or front fork 15 when seen from the direction of horn axis H, the warning sound cannot easily be blocked by these members 11 and 15. Since the horn 61 is not hidden by the rear cover portion 43 (inner fender 47) as seen from the direction of horn axis H, the warning sound cannot easily be blocked by these members 43 and 47.

Since the area rearward of the horn 61 is covered by the rear cover portion 43, the warning sound of the horn 61 does not easily leak rearward. Therefore, the warning sound can be led to the opening A conveniently, and lowering of the volume of the warning sound can be inhibited conveniently.

Further, since the rear cover portion 43 extends downward, the warning sound can be further inhibited from leaking rearward. The rear cover portion 43 which reflects the warning sound can also send the warning sound forward. Such effect of making the warning sound unable to leak easily rearward and easy to proceed forward is particularly outstanding when the horn 61 is disposed to have the horn axis H extend downward and forward (that is, when the horn 61 is tilted downward).

Since the areas laterally of the horn 61 are covered by the body cover 21 (front cover portion 41 and rear cover portion 43), the warning sound of the horn 61 does not easily leak rearward. Therefore, the warning sound can be led to the opening A conveniently, and lowering of the volume of the warning sound can be inhibited conveniently.

Since the horn 61 is disposed above the opening A and above the underbracket 53, foreign substances thrown up by the front wheel 11 can conveniently be prevented from contaminating the horn 61. Further, since the horn 61 is disposed above the lower end of the head tube 33, contamination of the horn 61 can be prevented further conveniently.

Since at least part of the horn 61 overlaps the head tube 33 as seen from a side of the vehicle, the length in the longitudinal direction x of the front cover portion 41 and rear cover portion 43 can be restrained.

Since the front fender 63 is supported by the underbracket 53, the front fender 63 does not move up and down relative to the body cover 21 even with extension and contraction of the front tube 55. Consequently, the front fender 63 can be maintained in a substantially constant position relative to the body cover 21, and entry of foreign substances to the body cover 21 can be prevented stably. What is necessary is just to attach the front fender 63 to a single member (underbracket 53). Compared with the case of attaching the front fender 63 to two members (e.g. the pair of front tubes 55), this can simplify the support structure and can reduce the number of parts.

The top end 63T of the front fender 63 overlaps the front cover portion 41 as seen from the front, and the front fender 63 lies close to the front cover portion 41. This can prevent, with increased accuracy, foreign substances from entering between the front cover portion 41 and the rear cover portion 43.

Since the horn 61 is disposed rearward of the headlight unit 45, there is no possibility of the headlight unit 45 and the horn 61 interfering with each other. Since the placement of the headlight unit 45 is not restricted by the horn 61, the degree of freedom for placing the headlight unit 45 is increased. The headlight unit 45, even if large-sized, can be placed easily.

Since the horn 61 overlaps the headlight unit 45 as seen from the front, the installation space for the horn 61 and headlight unit 45 can be made compact in the vertical direction z. Therefore, the length in the vertical direction z of the front cover portion 41 can be restrained.

Since the horn 61 is disposed on one side of the head tube 33 in the transverse direction y and the storage case 44 is disposed on the other side of the head tube 33 in the transverse direction y, the installation space for these horn 61 and storage case 44 can be made compact.

Since the opposite ends 83R and 83L of the cover holding member 83 are located above the headlight unit 45, respectively, the headlight unit 45 can be placed in a relatively low position of the front cover portion 41. Therefore, the headlight unit 45, even if large-sized, can easily be provided for the front cover portion 41.

Since the cover holding member 83 is disposed not to overlap the headlight unit 45 as seen from the front, the installation space for the headlight unit 45 and cover holding member 83 may be made compact in the longitudinal direction x. Therefore, the length in the longitudinal direction x of the body cover 21 can be restrained.

Since the position of the middle part 83M of the cover holding member 83 is higher than the middle part of the headlight unit 45 and lower than the ends of the headlight unit 45 as seen from the front, the installation space for the headlight unit 45 and cover holding member 83 can be made compact in the vertical direction z. Therefore, the length in the vertical direction z of the front cover portion 41 can be restrained.

Since the horn 61 is supported by the head tube 33, the horn 61 can be supported firmly. This can also inhibit vibration from being transmitted to the horn 61. Since the horn 61 is not supported by the front fork 15, the horn 61 does not move relative to body cover 21 even when the front fork 15 is moved relative to the body cover 21 (head tube 33) by operation of the handlebar 17, for example. Therefore, the body cover 21 can be reduced in size.

Since the mounting member 49 for attaching the license plate is provided on the front cover portion 41, the license plate can be attached conveniently to the front cover portion 41.

### Second Embodiment

Next, Embodiment 2 of the present teaching will be described with reference to the drawings. Components identical to those of Embodiment 1 are shown with the same signs, and will not particularly be described.

### 1. Outline construction of saddle riding type vehicle

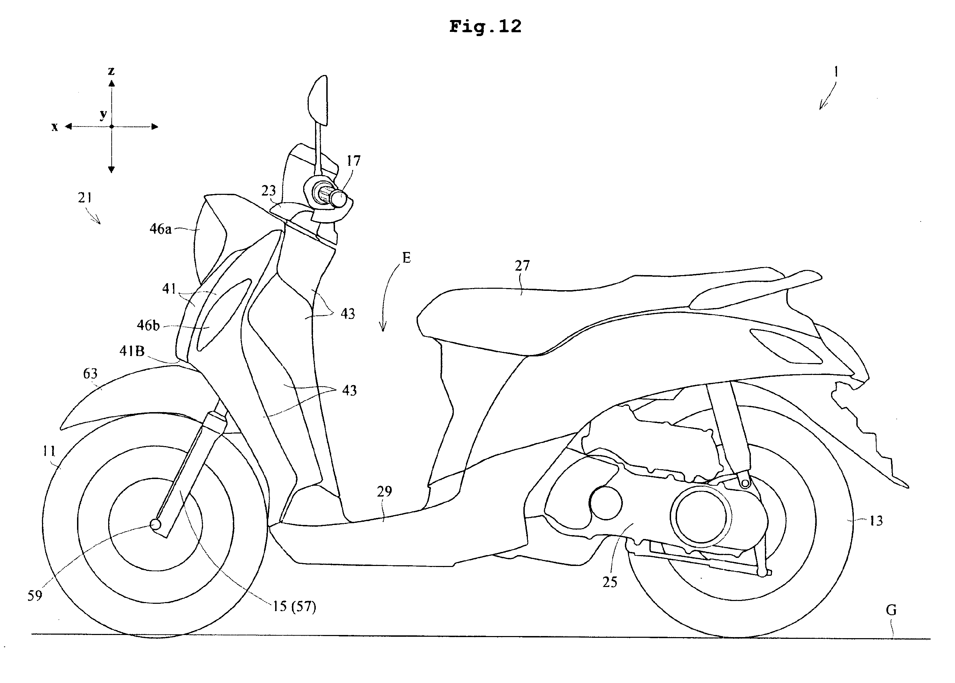

Fig. 12 is a left side view of the saddle riding type vehicle according to Embodiment 2. A front part of the flat footboard 29 in Embodiment 2 extends slightly upward. This front part of the flat footboard 29 functions as part of the rear cover portion 43.

The saddle riding type vehicle 1 has a headlight 46a and flashers 46b. The headlight 46a and flashers 46b are arranged separately form each other. The headlight 46a and flashers 46b correspond to the light unit in the present teaching, respectively.

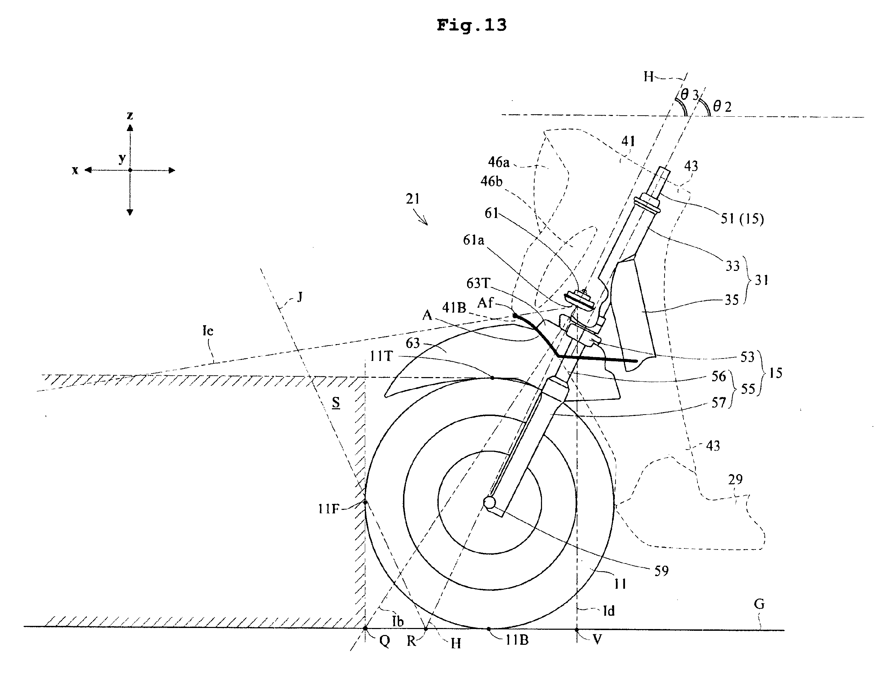

Fig. 13 is a left side view showing structures inside a body cover according to Embodiment 2. As shown in Fig. 13, the horn 61 is disposed in a position higher than the opening A. The horn 61 is disposed in a height position similar to the lower end of the head tube 33. The horn 61 is disposed in a position slightly higher than the underbracket 53. As seen from a side of the vehicle, at least part of the horn 61 overlaps the head tube 33. The horn 61 is disposed below the headlight 46a. The horn 61 overlaps neither the headlight 46a nor the flashers 46b as seen from a side of the vehicle.

The horn axis H extends downward and forward of the horn 61, and overlaps the front wheel 11 as seen from a side of the vehicle. However, the horn axis H does not extend further forward than the front wheel 11. That is, the horn axis H does not pass through the area S. A position R where the horn axis H meets the traveling surface G is rearward of the end point Q of the area S. In other words, the point R at which the horn axis H meets the traveling surface G is located rearward of the front end 11 F of the front wheel 11. Fig. 13 shows a vertical virtual line ld which passes through the horn 61, and a point V at which this virtual line ld meets the traveling surface G. The horn axis H lies within a range from the virtual line lb to the virtual line ld. The position R is rearward of the end point Q and forward of the point V.

The inclination of the horn axis H approximates the inclination of the head tube 33. As an example, Fig. 13 shows angle θ3 to the horizon of the horn axis H and angle θ2 to the horizon of the head tube 33. Angle (3 is substantially the same as angle (2.

As clearly shown in Fig. 13, the horn axis H runs past the front of the front fork 15 as seen from a side of the vehicle.

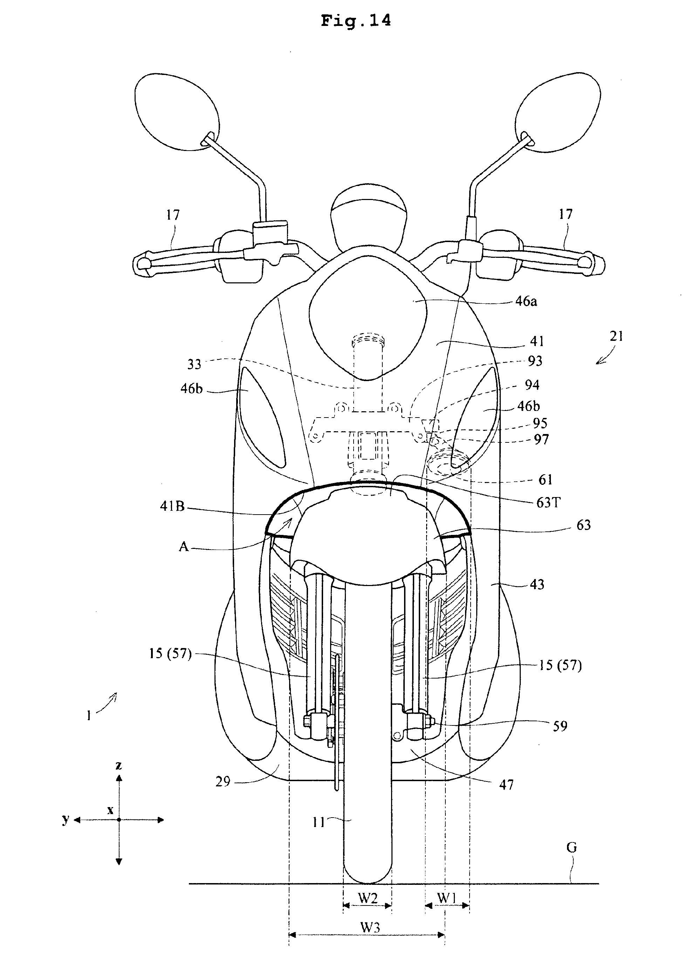

Fig. 14 is a front view of the saddle riding type vehicle 1. Fig. 14 shows the saddle riding type vehicle 1 when the front end 11 F of the front wheel 11 is located at the vehicle center C.

As shown, in this Embodiment 2 also, the line at the top end of the inner fender 47 substantially corresponds to the outline of the rear part of the opening A.

As seen from the front, a plurality of (two) flashers 46b are arranged to the right and left of the headlight 46a, respectively. As seen from the front, the horn 61 is disposed to the left of the head tube 33. As seen from the front, the horn 61 does not overlap the headlight 46a. As seen from the front, part of the horn 61 overlaps the left flasher 46b. No horn bore is formed in the front face of the front cover portion 41. The mounting member 49 for attaching the license plate is not disposed on the front face of the front cover portion 41.

The position of the horn 61 in the transverse direction y is displaced from the position of the front wheel 11 in the transverse direction y. More particularly, when the forward end 11 F of the front wheel 11 is located at the vehicle center C, the horn 61 is located to the left of the front wheel 11 in the transverse direction y. Fig. 14 shows a range W1 in which the horn 61 is located in the transverse direction y, and a range W2 in which the front wheel 11 is located in transverse direction y. As seen from the front, the range W1 does not overlap the range W2, but is displaced to the left of the range W2.

The horn 61 is disposed in a position higher than the front fender 63. When the front end 11 F is located at the vehicle center C, at least part of the horn 61 is located outward of the front fender 63 in the transverse direction y. More particularly, part of a range in the transverse direction y where the horn 61 is located is displaced from the position of the front fender 63 in the transverse direction y. Fig. 14 shows the range W3 in which the front fender 63 is located in the transverse direction y. As seen from the front, part of the range W1 is displaced to the left of the range W3, and the remaining part of the range W1 overlaps the range W3.

As shown in Fig. 13, and as seen from a side of the vehicle, the top end 63T of the front fender 63 protrudes to an area between the front cover portion 41 and the rear cover portion 43 through the opening A. In other words, the top end 63T is located above the opening A. However, as shown in Fig. 14, as seen from the front, the front fender 63 does not overlap the front cover portion 41. As seen from the front, the top end 63T is not hidden by the front cover portion 41.

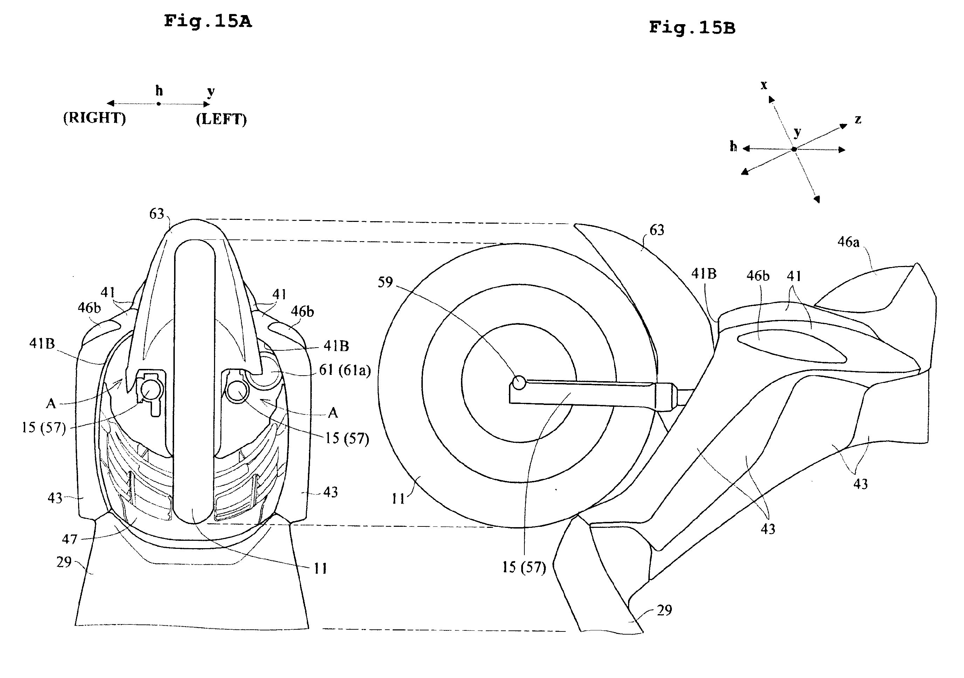

Reference is made to Figs. 15A and 15B. Fig. 15A is a view of the saddle riding type vehicle 1 seen from the direction of horn axis H. Fig. 15B is a side view corresponding to Fig. 15A of the saddle riding type vehicle 1. In Figs. 15A and 15B, the front end 11 F of the front wheel 11 is located at the vehicle center C. In Figs. 15A and 15B, the right in the transverse direction y is indicated "RIGHT", the left in the transverse direction y "LEFT", and an axis parallel to the horn axis H "h".

As shown in Fig. 15A, the front part of the opening A is defined by the lower surface 41 B of the front cover portion 41. When seen from the direction of horn axis H, a central portion of the opening A is covered by the front fender 63. A right portion and a left portion of the opening A are not covered by the front fender 63. That is, gaps between the front cover portion 41 and the front fender 63 are formed in the right portion and left portion of the opening A. Through these right and left gaps, areas between the front cover portion 41 and the rear cover portions 43 (interiors of the body cover 21) are visible.

The horn 61 is visible (exposed) in the opening A when seen from the direction of horn axis H. The horn 61 is exposed from between the front cover portion 41 and the front fender 63. The position in which the horn 61 is exposed is a front portion of the opening A. More particularly, the position in which the horn 61 is exposed is a forward and leftward edge region in the opening A. The position in which the horn 61 is exposed is to the left of the front fender 63. Of the right and left gaps between the front cover portion 41 and the front fender 63, the position in which the horn 61 is exposed is near a front end of the left gap.

The horn 61 is not exposed in its entirety, but only part of the front face 61a is exposed. The remaining portions of the front face 61a are hidden behind the front cover portion 41 or the front fender 63, and are not exposed. The exposed portion of the horn 61 is now called the "first portion", and the unexposed portions of the horn 61 the "second portions". The second portions are separately formed at opposite sides of the first portion. One of the second portions overlaps a forward and left region of a lower part of the front cover portion 41, the other of the second portions overlaps a right region of the front fender 63.

As is clear from the appearance in Fig. 15A of the flat footboard 29, the front part of the flat footboard 29 functions as the rear cover portion 43.

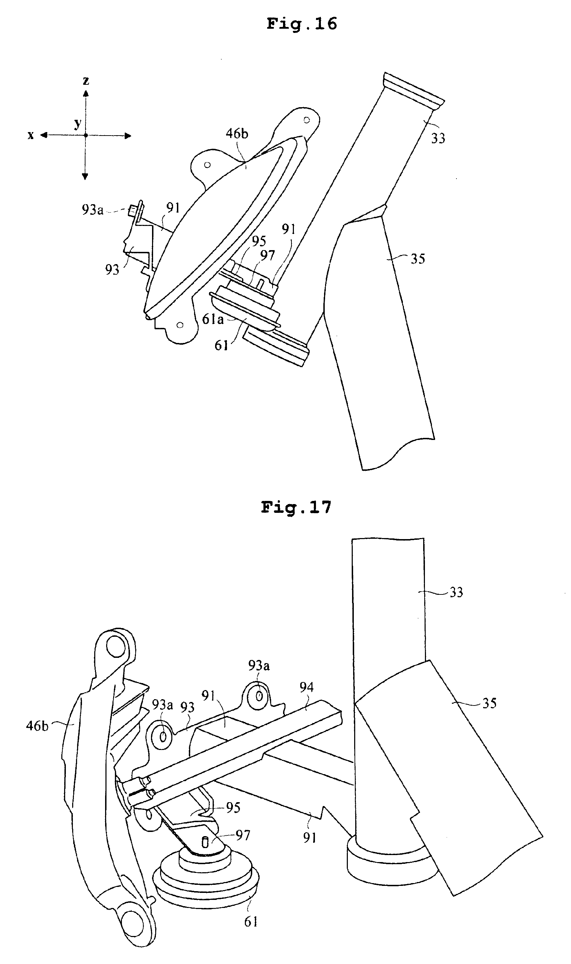

Figs. 16 and 17 are a side view and a perspective view showing a mounting structure for the front cover portion and the horn. For convenience, the front cover portion and other components are not shown. As seen, a stay member 91 is attached to the head tube 33. The stay member 91 has a forward end portion thereof projecting forward from the head tube 33. A cover holding member 93 is attached to the forward end portion of the stay member 91. The cover holding member 93 has small bores 93a formed in upper parts thereof for attaching the front cover portion 41. The stay member 91 supports a beam 94 extending substantially horizontally. A flasher 46b is supported by an end of the beam 94. Figs. 16 and 17 show only the left flasher 46b.

The beam 94 further supports a horn holding member 95. A distal end of the horn holding member 95 extends substantially rearward from the beam 94. A horn stay member 97 is further attached to the distal end of the horn holding member 95. The horn stay member 97 holds the horn 61.

In this Embodiment 2 described above, the warning sound propagates as follows. That is, since the horn axis H extends downward and forward of the horn 61, the warning sound emitted from the horn 61 proceeds forward centering on the horn axis H, reflects on the traveling surface G in the position R, and proceeds further forward. Fig. 13 schematically shows, by way of example, a direction of movement J of the warning sound after the reflection. Thus, in this Embodiment 2 also, the warning sound can be conveniently sent forward from the horn 61.

In this Embodiment 2, since the height position of the horn 61 is relatively low and is close to the opening A, an angular area is relatively large for emitting the warning sound outside through the opening A. That is, the warning sound can be emitted over an increased range. For example, the warning sound is permitted to proceed also along a virtual line le linking the front face 61a of the horn 61 and a front end Af of the opening A. Therefore, the warning sound can be sent forward from the horn 61 with increased effect.

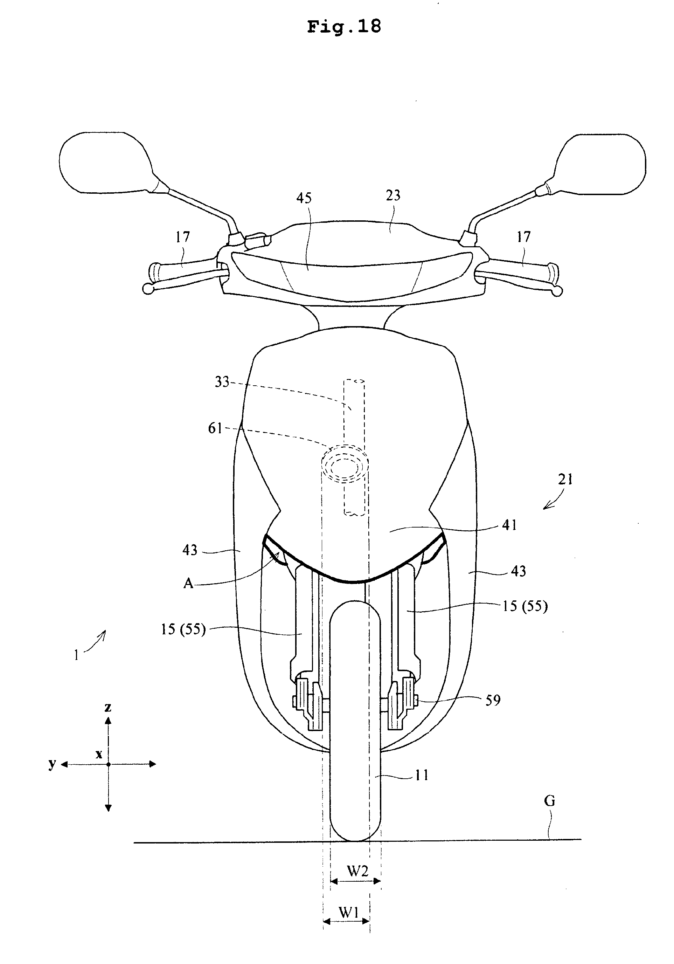

The present teaching is not limited to the foregoing embodiments, but may be modified as follows:
(1) In the foregoing embodiments, as shown in Figs. 6A and 6B and Figs. 15A and 15B, only part of the horn 61 is exposed from the opening A as seen from the direction of horn axis H, but this is not limitative. That is, a change may be made to expose the entire horn 61 in the opening A as seen from the direction of horn axis H.
(2) In the foregoing embodiments, as shown in Figs. Figs. 6A and 6B and Figs. 15A and 15B, each of the front cover portion 41 and front fender 63 overlaps part of the horn 61 as seen from the direction of horn axis H, but this is not limitative. For example, a change may be made such that, as seen from the direction of horn axis H, the horn 61 overlaps one or neither of the front cover portion 41 and front fender 63.
(3) In the foregoing embodiments, as shown in Fig. 2, the horn axis H overlaps the front wheel 11 as seen from a side of the vehicle, but this is not limitative. For example, the horn axis H does not need to overlap the front wheel 11 as seen from a side of the vehicle. Specifically, the horn axis H may be changed to a virtual line Ic shown in Fig. 2. The virtual line Ic is an example of horn axis which extends downward and forward of the horn 61 to a position forward of the front wheel 11, and does not overlap the front wheel 11 as seen from a side of the vehicle. In this modification also, the warning sound can conveniently reflect on the traveling surface G.
(4) In the foregoing embodiments, the horn 61 is the disc type, but this is not limitative. It can be replaced with a varied type horn. For example, the spiral type and trumpet type may be cited. In the case of spiral type, for example, the front face which emits the warning sound is formed of an open section of a sound path.
(5) In the foregoing embodiments, as shown in Figs. 5 and 14, when the front end 11 F of the front wheel 11 is located at the vehicle center C, the horn 61 is located outward of the front wheel 11 in the transverse direction y as seen from the front, but this is not limitative. For example, when the front end 11 F of the front wheel 11 is located at the vehicle center C, the position of the horn 61 in the transverse direction y may overlap the position of the front wheel 11 in the transverse direction y.
   Reference is made to Fig. 18. Fig. 18 is a front view of a saddle riding type vehicle according to a modified embodiment. Components identical to those of the embodiments are shown with the same signs. Between the front cover portion 41 and the rear cover portion 43 are the head tube 33 and the horn 61. Fig. 18 shows a range W1 in which the horn 61 is located in the transverse direction y, and a range W2 in which the front wheel 11 is located in the transverse direction y. As seen from the front, a part of the range W1 is displaced rightward from the range W2, and the other part of the range W1 overlaps the range W2.
   As in this modified embodiment, when the front end 11 F of the front wheel 11 is located at the vehicle center C, part of the horn 61 may overlap the front wheel 11 in the transverse direction y. Alternatively, a change may be made to place the entire horn 61 to overlap the front wheel 11 in the transverse direction y. This can make the size of the opening A in the transverse direction y still smaller, and can restrain the length of the body cover 21 in the transverse direction y.
(6) In the foregoing embodiments, as clearly shown in Fig. 8, when the front end 11 F is located at the vehicle center C, the horn 61 does not overlap the front wheel 11 as seen from the direction of horn axis H, but this is not limitative. For example, a change may be made such that, as seen from the direction of horn axis H, at least part of the horn 61 overlaps the front wheel 11 with the front end 11 F located at the vehicle center C. This can make the size of the opening A in the transverse direction y still smaller, and can restrain the length of the body cover 21 in the transverse direction y.
(7) In the foregoing embodiments, as clearly shown in Fig. 8, when the front end 11 F is located at the vehicle center C, the entire horn 61 is located outward of the front wheel 11 in the transverse direction y as seen from the direction of horn axis H, but this is not limitative. For example, a change may be made such that, as seen from the direction of horn axis H, at least part of the horn 61 is located outward of the front wheel 11 in the transverse direction y with the front end 11 F located at the vehicle center C. This can make the size of the opening A in the transverse direction y still smaller, and can restrain the length of the body cover 21 in the transverse direction y.
(8) In the foregoing embodiments, as clearly shown in Fig. 8, when the front end 11 F is located at the vehicle center C, part of the horn 61 is located outward of the front fork 15 in the transverse direction y, but this is not limitative. For example, a change may be made to place the entire horn 61 outward of the front fork 15 in the transverse direction y. This can further inhibit the warning sound from being blocked by the front fork 15. Further, for example, a change may be made to place the entire horn 61 to overlap the front fork 15 in the transverse direction y. This can make the size of the opening A in the transverse direction y still smaller, and can restrain the length of the body cover 21 in the transverse direction y.
(9) In the foregoing embodiments, the horn 61 is disposed to the right or left of the head tube 33 as seen from the front, but this is not limitative. For example, as shown in Fig. 18, the horn 61 may be disposed to overlap the head tube 33 as seen from the front. Or the horn 61 may be disposed to the left of the head tube 33 as seen from the front.
(10) The foregoing embodiments illustrate the front cover portion 41 without horn bores, but this is not limitative. That is, a change may be made to a front cover portion with horn bores. In this case, a change may be made to have horn bores of reduced size. Or, furthermore, the number of horn bores may be decreased.
(11) In foregoing Embodiment 1, the headlight unit 45 has the headlight and flashers constructed integral, but this is not limitative. For example, a change may be made to a light unit having only a headlight, or a change may be made to a light unit having only flashers. As in Embodiment 2, the headlight 46a and flashers 46b may be arranged separately. These modified embodiments can increase the degree of freedom for arranging the headlight and flashers.
(12) In foregoing Embodiment 1, the headlight unit 45 is provided for the front cover portion 41, but this is not limitative. As shown in Fig. 18, for example, a change may be made to provide the headlight unit 45 for the handlebar cover 23. A change may be made to omit the headlight unit 45 from the front cover portion 41. Or a change may be made to provide the headlight for the front cover portion 41 and the flashers for the handlebar cover 23. A change may be made to provide the flashers for the front cover portion 41 and the headlight for the handlebar cover 23. Thus, all the functions or part of the functions of the headlight unit 45 may be transferred to the handlebar cover 23. A similar change may be made to the arrangement of the headlight 46a and flashers 46b described in Embodiment 2.
(13) In the foregoing embodiments, the body cover 21 is constructed of a plurality of separable members 71, 75, 77 and 47, but this is not limitative. That is, the body cover 21 may be constructed of a single member. This can construct the front cover portion 41 and rear cover portion 43 integrally.
   Similarly, in foregoing Embodiment 1, the front cover portion 41 is constructed of a plurality of separable members 71 and 75, but this is not limitative. That is, the front cover portion 41 may be constructed of a single member. In foregoing Embodiment 1, the rear cover portion 43 is constructed of a plurality of members 71, 77 and 47, but this is not limitative. The rear cover portion 43 may be constructed of a single member.
(14) The foregoing embodiments illustrate, by way of example, that the connection positions where the plurality of members 71, 75 and 77 are connected to one another are different from boundaries between the front cover portion 41 and the rear cover portion 43, but this is not limitative. That is, the connection positions of the plurality of members constituting the body cover 21 may be in agreement with the boundaries between the front cover portion 41 and the rear cover portion 43.
(15) In the foregoing embodiments, the front cover portion 41 and the front fender 63 are separate bodies, but this is not limitative. That is, as shown in Fig. 18, the front fender 63 may be omitted. In this case, a further change may be made such that the front cover portion 41 may have the function of a front fender.
(16) The foregoing embodiments provide the inner fender 47, but this is not limitative. The inner fender 47 may be omitted. Or, a change may be made to replace the inner fender 47 with a radiator or other component.
(17) In the foregoing embodiments, the saddle riding type vehicle 1 is a two-wheeled motor vehicle with the single front wheel 11 and single rear wheel 13, but this is not limitative. For example, a change may be made to a three-wheeled vehicle with two front wheels, or a three-wheeled vehicle with two rear wheels. Or a change may be made to a four-wheeled vehicle with two front wheels and two rear wheels. In such modified embodiments, the construction of the front fork 15 may be selected or varied as appropriate.
(18) In the foregoing embodiments, the saddle riding type vehicle 1 includes the engine unit 25 as power source, but this is not limitative. For example, a change may be made to include an electric motor as power source.
(19) In the foregoing embodiments, the saddle riding type vehicle 1 is the motor scooter type, but this is not limitative. That is, a change may be made to a saddle riding type vehicle 1 of other type. For example, a change may be made to an underbone type saddle riding type vehicle 1. With such a change, the construction of the saddle riding type vehicle 1 may also be varied as appropriate. For example, the flat footboard 29 may be omitted and pedals may be provided for the rider to place the feet on.
(20) A further change may be made in the foregoing embodiments and each of the modified embodiments described in sections (1) to (19) above, as appropriate, by replacing each construction with another modification or combining the described constructions.

## Claims

1. A saddle riding type vehicle comprising:
a head tube (33);
a front fork (15) rotatably supported by the head tube (33);
a front wheel (11) supported by lower parts of the front fork (15);
a body cover (21) having a front cover portion (41) disposed forward of the head tube (33), and a rear cover portion (43) disposed rearward of the head tube (33) and connected to the front cover portion (41); and
a horn (61) disposed between the front cover portion (41) and the rear cover portion (43);
wherein the body cover (21) has an opening (A) formed therein for receiving the front fork (15);
the horn (61) is disposed above the opening (A), **characterized in that** the horn (61) is disposed to have a horn axis (H) perpendicular to a front face (61 a) thereof and extending downward and forward; and
at least part of the horn (61) is visible through the opening (A) for receiving the front fork (15), when seen from a direction of the horn axis (H).

2. A saddle riding type vehicle according to claim 1, **characterized in that** the horn (61) is disposed to have the horn axis (H) extending further forward than the front wheel (11).

3. A saddle riding type vehicle according to claim 1 or 2, **characterized in that** at least part of the horn (61) overlaps the head tube (33) as seen from a side of the vehicle.

4. A saddle riding type vehicle according to at least one of the claims 1 to 3, **characterized in that** the horn axis (H) overlaps the front wheel (11) as seen from a side of the vehicle.

5. A saddle riding type vehicle according to at least one of the claims 1 to 4, **characterized in that**, when a front end (11 F) of the front wheel (11) is located at a vehicle center (C), at least part of the horn (61) is located outward of the front fork (15) in a transverse direction (y) of the vehicle, preferably the horn (61) is located completely outward of the front wheel (11) in a transverse direction (y) of the vehicle.

6. A saddle riding type vehicle according to at least one of the claims 1 to 5, **characterized in that**, when a front end (11 F) of the front wheel (11) has turned outward in a transverse direction (y) of the vehicle, the front wheel (11) and the horn (61) overlap each other as seen from a direction of the horn axis (H).

7. A saddle riding type vehicle according to at least one of the claims 1 to 6, **characterized in that** the front cover portion (41) has an imperforate front face.

8. A saddle riding type vehicle according to at least one of the claims 1 to 7, **characterized in that** the front fork (15) includes:
a steering shaft (51) rotatably supported by the head tube (33);
an underbracket (53) connected to a lower part of the steering shaft (51); and front tubes (55) supported by the underbracket (53) for supporting the front wheel (11);
the horn (61) being disposed above the underbracket (53) as seen from a side of the vehicle.

9. A saddle riding type vehicle according to at least one of the claims 1 to 8, **characterized by** a front fender (63) for covering an area above the front wheel (11), the front fender (63) having a top end (63T) thereof overlapping the front cover portion (41) when seen from front of the vehicle, preferably when a front end (11 F) of the front wheel (11) is located at a vehicle center (C), at least part of the horn (61) is exposed between the body cover (21) and the front fender (63) as seen from a direction of the horn axis (H).

10. A saddle riding type vehicle according to at least one of the claims 1 to 9, **characterized in that** part of the horn (61) is hidden by the body cover (21) as seen from a direction of the horn axis (H).

11. A saddle riding type vehicle according to at least one of the claims 1 to 10, **characterized by**:
a seat (27) for seating a rider; and
a flat footboard (29) disposed forward and downward of the seat (27);
the rear cover portion (43) extending below the front cover portion (41);
the rear cover portion (43) passing through an area rearward of the front wheel (11) to be connected to the flat footboard (29).

12. A saddle riding type vehicle according to at least one of the claims 1 to 11, **characterized by** a light unit (45,46a,46b) provided for the front cover portion (41), the horn (61) being disposed rearward of the light unit (45,46a,46b), preferably the horn (61) overlaps the light unit (45,46a,46b) as seen from front of the vehicle, and preferably the light unit has at least either a headlight (46a) or flashers (46b).

13. A saddle riding type vehicle according to at least one of the claims 1 to 12, **characterized by** a horn holding member (85,95) supported by the head tube (33) for holding the horn (61).

14. A saddle riding type vehicle according to at least one of the claims 1 to 13, **characterized by**:
a cover holding member (83,93) provided between the front cover portion (41) and
the rear cover portion (43) for holding the front cover portion (41);
the cover holding member (83,93) being approximately V-shaped as seen from front of the vehicle, and having opposite end regions (83R,83L) thereof for holding the front cover portion (41);
each of the opposite end regions (83R,83L) of the cover holding member (83,93) being located above the light unit (45,46a,46b).

15. A saddle riding type vehicle according to at least one of the claims 1 to 14, **characterized by** a mounting member (49) provided on the front cover portion (41) for attaching a license plate.

## Patentansprüche

1. Ein Sattel-Reit-Typ-Fahrzeug mit:
einem Gabelschaft (33);
einer Frontgabel (15), drehbar gelagert durch den Gabelschaft (33);
ein Vorderrad (11), gelagert durch untere Teile der Frontgabel (15);
eine Fahrzeugabdeckung (21), die einen vorderen Abdeckungsabschnitt (41),
angeordnet vor dem Gabelschaft (33), und einen hinteren Abdeckungsabschnitt (43), angeordnet hinter dem Gabelschaft (33) und verbunden mit dem vorderen Abdeckungsabschnitt (41), aufweist; und
eine Hupe (61), positioniert zwischen dem vorderen Abdeckungsabschnitt (41) und dem hinteren Abdeckungsabschnitt (43);
wobei die Fahrzeugabdeckung (21) eine Öffnung (A) aufweist, die darin zur Aufnahme der Frontgabel (15) ausgebildet ist;
die Hupe (61) ist über der Öffnung (A) positioniert, **dadurch gekennzeichnet, dass** die Hupe (61) positioniert ist, um eine Hupen-Achse (H) aufzuweisen, die senkrecht zu einer Frontfläche (61 a) derselben ist, und sich nach unten und nach vorne erstrecken; und
zumindest ein Teil der Hupe (61) ist durch die Öffnung (A) zum Aufnehmen der Frontgabel (15) sichtbar, wenn aus einer Richtung der Hupen-Achse (H) betrachtet wird.

2. Ein Sattel-Reit-Typ-Fahrzeug gemäß Anspruch 1., **dadurch gekennzeichnet, dass** die Hupe (61) positioniert ist, um die Hupen-Achse (H) aufzuweisen, die sich weiter nach vorne erstreckt als das Vorderrad (11).

3. Ein Sattel-Reit-Typ-Fahrzeug gemäß Anspruch 1 oder 2, **dadurch gekennzeichnet, dass** zumindest ein Teil der Hupe (61) den Gabelschaft (33) überlappt, gesehen von einer Seite des Fahrzeugs.

4. Ein Sattel-Reit-Typ-Fahrzeug gemäß zumindest einem der Ansprüche 1 bis 3, **dadurch gekennzeichnet, dass** die Hupenachse (H) der Vorderrad (11) überlappt, gesehen von einer Seite des Fahrzeugs.

5. Ein Sattel-Reit-Typ-Fahrzeug gemäß zumindest einem der Ansprüche 1 bis 4, **dadurch gekennzeichnet, dass**, wenn ein Frontende (11F) des Vorderrads (11) an einer Fahrzeugmitte (C) ist, ist zumindest ein Teil der Hupe (61) in Querrichtung (y) des Fahrzeugs außerhalb der Frontgabe (15), vorzugsweise ist die Hupe (61) in Querrichtung (y) des Fahrzeugs vollständig außerhalb von dem Vorderrad (11).

6. Ein Sattel-Reit-Typ-Fahrzeug gemäß zumindest einem der Ansprüche 1 bis 5, **dadurch gekennzeichnet, dass**, wenn ein Frontende (11F) des Vorderrads (11) in Querrichtung (y) des Fahrzeugs nach außen gedreht wurde, überlappen das Vorderrad (11) und die Hupe (61) einander, gesehen aus einer Richtung der Hupen-Achse (H).

7. Ein Sattel-Reit-Typ-Fahrzeug gemäß zumindest einem der Ansprüche 1 bis 6, **dadurch gekennzeichnet, dass** der vordere Abdeckungsabschnitt (41) eine nicht durchbrochene Frontfläche hat.

8. Ein Sattel-Reit-Typ-Fahrzeug gemäß zumindest einem der Ansprüche 1 bis 7, **dadurch gekennzeichnet, dass** die Frontgabel (15) beinhaltet:
einen Lenkschaft (51), drehbar gelagert durch den Gabelschaft (33); eine Unterklammer (53), verbunden zu einem unteren Teil des Lenkschafts (51); und
Frontrohre (55), gelagert durch die Unterklammer 53 zum Lagern des Vorderrades (11);
die Hupe (61) ist über der Unterklammer (53) positioniert, gesehen von einer Seite des Fahrzeugs.

9. Ein Sattel-Reit-Typ-Fahrzeug gemäß zumindest einem der Ansprüche 1 bis 8, **gekennzeichnet durch** eine Frontradabdeckung (63) zum Abdecken eines Bereichs über dem Vorderrad (11), die Frontradabdeckung (63) hat ein oberes Ende (63T) derselben, welches den vorderen Abdeckungsabschnitt (41) überlappt, wenn gesehen von der Front des Fahrzeugs, vorzugsweise wenn ein Vorderende (11 F) des Vorderrades (11) an der Fahrzeugmitte (C) ist, ist zumindest ein Teil der Hupe (61) zwischen der Fahrzeugabdeckung (21) und der Frontradabdeckung (63) freiliegend, gesehen von einer Richtung der Hupen-Achse (H).

10. Ein Sattel-Reit-Typ-Fahrzeug gemäß zumindest einem der Ansprüche 1 bis 9, **dadurch gekennzeichnet, dass** ein Teil der Hupe (61) durch die Fahrzeugabdeckung (21) versteckt ist, gesehen aus einer Richtung der Hupen-Achse (H).

11. Ein Sattel-Reit-Typ-Fahrzeug gemäß zumindest einem der Ansprüche 1 bis 10, **gekennzeichnet durch**:
einen Sitz (27) zum Sitzen eines Fahrers; und
ein flaches Trittbrett (29), positioniert vor und unter dem Sitz (27);
der hintere Abdeckungsabschnitt (43) erstreckt sich unter den vorderen Abdeckungsabschnitt (41);
der hintere Abdeckungsabschnitt (43) passt **durch** einen Bereich hinter dem Vorderrad (11) zur Verbindung mit dem flachen Trittbett (29).

12. Ein Sattel-Reit-Typ-Fahrzeug gemäß zumindest einem der Ansprüche 1 bis 11, **gekennzeichnet durch**, eine Beleuchtungseinheit (45, 46a, 46b), vorgesehen für den vorderen Abdeckungsabschnitt (41), die Hupe (61) ist hinter der Beleuchtungseinheit (45, 46a, 46b) positioniert, vorzugsweise überlappt die Hupe (61) die Beleuchtungseinheit (45, 46a, 46b), gesehen von einer Front des Fahrzeugs, und vorzugsweise hat die Beleuchtungseinheit zumindest entweder ein Fahrlicht (46a) oder Blinker (46b).

13. Ein Sattel-Reit-Typ-Fahrzeug gemäß zumindest einem der Ansprüche 1 bis 12, **gekennzeichnet durch** ein Hupen-Halteelement (85, 95), gelagert **durch** den Gabelschaft (33), zum Halten der Hupe (61).

14. Ein Sattel-Reit-Typ-Fahrzeug gemäß zumindest einem der Ansprüche 1 bis 13, **gekennzeichnet durch**:
ein Abdeckungshalteelement (83, 93), vorgesehen zwischen dem vorderen Abdeckungsabschnitt (41) und dem hinteren Abdeckungsabschnitt (43) zum Halten des vorderen Abdeckungsabschnitts (41);
das Abdeckungshalteelement (83, 93) hat annähernd eine V-förmige Form, wenn gesehen von der Front des Fahrzeugs, und hat gegenüberliegende Endbereiche (83R, 83L) derselben zum Halten des vorderen Abdeckungsabschnitts (41);
jede der gegenüberliegenden Endbereiche (83R, 83L) des Abdeckungshalteelements (83, 93) ist oberhalb der Beleuchtungseinheit (45, 46a, 46b) angeordnet.

15. Ein Sattel-Reit-Typ-Fahrzeug gemäß zumindest einem der Ansprüche 1 bis 14, **gekennzeichnet durch** ein Montageelement (49), vorgesehen an dem vorderen Abdeckungsabschnitt (41) zum Anbringen einer Lizenzplatte.

## Revendications

1. Véhicule de type monté à califourchon comprenant
- un tube de tête (33) ;
- une fourche avant (15) supportée en rotation par le tube de tête (33) ;
- une roue avant (11) supportée par des parties inférieures de la fourche avant (15) ;
- une couverture de carrosserie (21) comportant une partie de couverture avant (41) disposée en avant du tube de tête (33) et une partie de couverture arrière (43) disposée en arrière du tube de tête (33) et reliée à la partie de couverture avant (41) ; et
- un avertisseur (61) disposé entre la partie de couverture avant (41) et la partie de couverture arrière (43) ;
- dans lequel la couverture de carrosserie (21) comporte une ouverture (A) ménagée dans celle-ci pour recevoir la fourche avant (15) ;
- l'avertisseur est disposé au-dessus de l'ouverture (A), **caractérisé en ce que** :
- l'avertisseur (61) est disposé pour avoir un axe d'avertisseur (H) perpendiculaire à une face avant (61a) de celui-ci et s'étendant vers le bas et vers l'avant ; et
- au moins une partie de l'avertisseur (61) est visible à travers l'ouverture (A) pour recevoir la fourche avant (15) lorsqu'il est vu dans une direction de l'axe d'avertisseur (H).

2. Véhicule de type monté à califourchon selon la revendication 1, **caractérisé en ce que** l'avertisseur (61) est disposé pour avoir l'axe d'avertisseur (H) s'étendant plus en avant que la roue avant (11).

3. Véhicule de type monté à califourchon selon les revendications 1 ou 2, **caractérisé en ce qu'**au moins une partie de l'avertisseur (61) recouvre le tube de tête (33) lorsqu'il est vu depuis un côté du véhicule.

4. Véhicule de type monté à califourchon selon au moins une des revendications 1 à 3, **caractérisé en ce que** l'axe d'avertisseur (H) recouvre la roue avant (11) lorsqu'il est vu depuis un côté du véhicule.

5. Véhicule de type monté à califourchon selon au moins une des revendications 1 à 4, **caractérisé en ce que**, lorsqu'une extrémité avant (11F) de la roue avant (11) est située à un centre de véhicule (C), au moins une partie de l'avertisseur (61) est située vers l'extérieur de la fourche avant (15) dans une direction transversale (y) du véhicule, de préférence l'avertisseur (61) est situé complètement vers l'extérieur de la roue avant (11) dans une direction transversale (y) du véhicule.

6. Véhicule de type monté à califourchon selon au moins une des revendications 1 à 5, **caractérisé en ce que**, lorsqu'une extrémité avant (11F) de la roue avant (11) a tourné vers l'extérieur dans une direction transversale (y) du véhicule, la roue avant (11) et l'avertisseur (61) se recouvrent l'un l'autre lorsqu'ils sont vus dans une direction de l'axe d'avertisseur (H).

7. Véhicule de type monté à califourchon selon au moins une des revendications 1 à 6, **caractérisé en ce que** la partie de couverture avant (41) comporte une face avant non-perforée.

8. Véhicule de type monté à califourchon selon au moins une des revendications 1 à 7, **caractérisé en ce que** la fourche avant (15) comprend :
- un arbre de direction (51) supporté en rotation par le tube de tête (33) ;
- un sous-support (53) relié à une partie inférieure de l'arbre de direction (51) ; et
- des tubes avant (55) supportés par le sous-support (53) pour supporter la roue avant (11) ;
- l'avertisseur (61) étant disposé au-dessus du sous-support (53) lorsqu'il est vu depuis un côté du véhicule.

9. Véhicule de type monté à califourchon selon au moins une des revendications 1 à 8, **caractérisé par** un garde-boue avant (63) pour couvrir une zone au-dessus de la roue avant (11), le garde-boue avant (63) comportant une extrémité supérieure (63T) de celui-ci recouvrant la partie de couverture avant (41) lorsqu'il est vu depuis l'avant du véhicule, de préférence lorsqu'une extrémité avant (11F) de la roue avant (11) est située est située à un centre de véhicule (C), au moins une partie de l'avertisseur (61) étant exposée entre la couverture de carrosserie (21) et le garde-boue avant (63) lorsqu'elle est vue dans une direction de l'axe d'avertisseur (H).

10. Véhicule de type monté à califourchon selon au moins une des revendications 1 à 9, **caractérisé en ce qu'**une partie de l'avertisseur (61) est dissimulée par la couverture de carrosserie (21) lorsqu'elle est vue dans une direction de l'axe d'avertisseur (H).

11. Véhicule de type monté à califourchon selon au moins une des revendications 1 à 10, **caractérisé par** :
- un siège (27) pour assoir une personne montée à califourchon ; et
- un plateau de pied plan (29) disposé en avant et en arrière du siège (27) ;
- la partie de couverture arrière (43) s'étendant au-dessous de la partie de couverture avant (41) ;
- la partie de couverture arrière (43) traversant une zone en arrière de la roue avant (11) pour être reliée au plateau de pied plan (29).

12. Véhicule de type monté à califourchon selon au moins une des revendications 1 à 11, **caractérisé par** une unité lumineuse (45, 46a, 46b) prévue pour la partie de couverture avant (41), l'avertisseur (61) étant disposé an arrière de l'unité lumineuse (45, 46a, 46b), de préférence l'avertisseur (61) recouvre l'unité lumineuse (45, 46a, 46b) lorsqu'il est vu depuis l'avant du véhicule et de préférence l'unité lumineuse comporte au moins un phare avant (46a) ou des clignotants (46b).

13. Véhicule de type monté à califourchon selon au moins une des revendications 1 à 12, **caractérisé par** un élément de support d'avertisseur (85, 95) supporté par le tube de tête (33) pour tenir l'avertisseur (61).

14. Véhicule de type monté à califourchon selon au moins une des revendications 1 à 13, **caractérisé par** :
- un élément de support de couverture (83, 93) disposé entre la partie de couverture avant (41) et la partie de couverture arrière (43) pour tenir la partie de couverture avant (41) ;
- l'élément de support de couverture (83, 93) ayant approximativement la forme d'un V lorsqu'il est vu depuis l'avant du véhicule et comportant des zones d'extrémité opposées (83R, 83L) de celui-ci pour tenir la partie de couverture avant (41) ;
- chacune des zones d'extrémité opposées (83R, 83L) de l'élément de support de couverture (83, 93) étant située au-dessus de l'unité lumineuse (45, 46a, 46b).

15. Véhicule de type monté à califourchon selon au moins une des revendications 1 à 14, **caractérisé par** un élément de montage (49) disposé sur la partie de couverture avant (41) pour fixer une plaque d'immatriculation.
